# EUROPEAN PATENT SPECIFICATION

(11) **EP 3 798 956 B1**
(45) Date of publication and mention of the grant of the patent: **03.09.2025**
(21) Application number: 20199093.4
(22) Date of filing: 29.09.2020
(51) Int. Cl.: G06F 16/353, G06Q 10/0631, G06Q 10/0633, G06V 30/40, G06F 40/20

(54) **DOCUMENT PROCESSING FRAMEWORK FOR ROBOTIC PROCESS AUTOMATION**
DOKUMENTENVERARBEITUNGSRAHMEN FÜR ROBOTERGESTEUERTE PROZESSAUTOMATISIERUNG
STRUCTURE DE TRAITEMENT DE DOCUMENTS POUR L'AUTOMATISATION DE PROCESSUS ROBOTIQUE

(30) Priority: 30.09.2019 US 201916587386; 28.08.2020 WO PCT/US2020/048389
(43) Date of publication of application: 31.03.2021
(73) Proprietor: UiPath, Inc., New York, NY 10016 (US)
(72) Inventor: GLIGAN, Ioana, New York, NY 10016 (US); PARAU, Paul, New York, NY 10016 (US)
(74) Representative: V.O.

(56) References cited:
- US-A1- 2011 137 898
- US-A1- 2016 381 213
- US-A1- 2017 132 313
- US-A1- 2018 241 881
- US-A1- 2019 087 395
- US-A1- 2019 129 824
- US-A1- 2019 266 254
- PAVEL KAARNIJOKI: "INTELLIGENT AUTOMATION", INTELLIGENT AUTOMATION: ASSESSING ARTIFICIAL INTELLIGENCE CAPABILITIES POTENTIAL TO COMPLEMENT ROBOTIC PROCESS AUTOMATION, 1 January 2019 (2019-01-01), pages 1 - 79, XP055802225, Retrieved from the Internet <URL:https://trepo.tuni.fi/bitstream/handle/123456789/27088/Kaarnijoki.pdf?sequence=4&isAllowed=y> [retrieved on 20210506]

## Description

### CROSS-REFERENCE TO RELATED APPLICATION

This application claims the benefit of U.S. Nonprovisional Patent Application No. 16/587,386 filed September 30, 2019.

### FIELD

The present invention generally relates to robotic process automation (RPA), and more specifically, to a document processing framework (DPF) for RPA.

### BACKGROUND

Most commercially available electronic document processing tools perform document processing on a single platform. Also, most vendors in the document processing space offer a black box solution in which components cannot be interchanged with third party offerings. Due to this limitation, customers who wish to use more than one vendor need to set up two or more parallel integrations, train employees in using two or more different tools, and provide respective user interfaces for performing these duties. This issue is present in solutions that aim to integrate multiple techniques for document processing, and is not necessarily RPA-specific. Indeed, a separate workflow is required for each vendor.

Furthermore, users who wish to use their own custom document processing algorithms need to build an entire infrastructure themselves to have them integrated and usable in an end-to-end process. Such document processing algorithms include, but are not limited to, handling digitization using multiple OCR vendors, handling taxonomy mappings across different solutions, integration and configuration of document processing algorithms from different vendors, aggregating results from multiple vendors under a unified data format, etc. Given the above, an improved document processing framework solution may be beneficial.

US2019/266254 concerns a robotic automation platform which is used for handling customer requests relating to insurances, e.g. free-form email requests. At first, another platform, the so-called AI orchestration platform, classifies the requests according to their intent. Based on the indication of intent, an entity identifier is extracted from the request. Both, the identified intent and entity identifier are transmitted to the robotic automation platform for further processing. The system facilitates the provision of accurate responses to the customer request.

### SUMMARY

The invention is defined in the appended claims.

Certain embodiments of the present invention may provide solutions to the problems and needs in the art that have not yet been fully identified, appreciated, or solved by current computer-based document processing techniques. For example, some embodiments of the present invention pertain to a DPF for RPA.

### BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:
FIG. 1 is an architectural diagram illustrating an RPA system, according to an embodiment of the present invention.
FIG. 2 is an architectural diagram illustrating a deployed RPA system, according to an embodiment of the present invention.
FIG. 3 is an architectural diagram illustrating the relationship between a designer, activities, and drivers, according to an embodiment of the present invention.
FIG. 4 is an architectural diagram illustrating an RPA system, according to an embodiment of the present invention.
FIG. 5 is an architectural diagram illustrating a computing system configured to provide a DPF for RPA, according to an embodiment of the present invention.
FIG. 6A is a screenshot illustrating a taxonomy manager, according to an embodiment of the present invention.
FIG. 6B is a screenshot illustrating a document types definition interface of the taxonomy manager, according to an embodiment of the present invention.
FIG. 6C is a screenshot illustrating a document type details interface of the taxonomy manager, according to an embodiment of the present invention.
FIG. 6D is a screenshot illustrating an edit field interface of the taxonomy manager, according to an embodiment of the present invention.
FIG. 7A is a screenshot illustrating an RPA workflow with a digitization activity, according to an embodiment of the present invention.
FIG. 7B is an enlarged view of a portion of the RPA workflow with the digitization activity, according to an embodiment of the present invention.
FIG. 8A is a screenshot illustrating a classify document scope workflow, according to an embodiment of the present invention.
FIG. 8B is a screenshot illustrating a classifier configuration interface, according to an embodiment of the present invention.
FIG. 9A is a screenshot illustrating a data extraction scope workflow, according to an embodiment of the present invention.
FIG. 9B is a screenshot illustrating an extractor configuration interface, according to an embodiment of the present invention.
FIG. 9C is a screenshot illustrating a document types and fields pane of the extractor configuration interface, according to an embodiment of the present invention.
FIG. 9D is a screenshot illustrating a FlexiCapture^{™} extractor pane of the extractor configuration interface, according to an embodiment of the present invention.
FIG. 9E is a screenshot illustrating a fixed form extractor pane of the extractor configuration interface, according to an embodiment of the present invention.
FIG. 10 is a screenshot illustrating a classifier and extractor training workflow, according to an embodiment of the present invention.
FIG. 11 is a screenshot illustrating a classifier training configuration interface, according to an embodiment of the present invention.
FIG. 12 is a flowchart illustrating a process for implementing a DPF for RPA, according to an embodiment of the present invention.

### DETAILED DESCRIPTION OF THE EMBODIMENTS

Some embodiments pertain to a document processing framework (DPF) for robotic process automation (RPA). In some embodiments, the DPF allows plug-and-play use of different vendor products on the same platform, where users can setup a basic schema for document processing and for a document understanding workflow. The DPF may thus allow users to process documents through the entire flow using in-application or third-party algorithms, for tasks such as, but not limited to, digitization, document classification and data extraction. This provides a unified experience and avoids vendor lock-in. The DPF of some embodiments, with this plug-and-play approach, supports combining, replacing, prioritizing, and filtering of document processing technologies based on the needs of each use case, thus offering flexibility in choosing the appropriate solution for each particular problem to be solved.

In some embodiments, the DPF allows users to: (1) define a taxonomy (i.e., a collection of document types); (2) digitize a file by processing the file to obtain machine-readable text; (3) classify the file into one or more document types by assigning a document type and a range of pages to each classification result using an available combination of algorithms for document classification; (4) validate the classification via a tool through which humans can validate/correct/manually perform file breakdown and classification; (5) extract data by assigning identified values from within a document or range of pages to a requested field using an available combination of algorithms for data extraction; (6) validate the extraction via a tool through which humans can validate/correct/manually perform data extraction; (7) train classifiers by ensuring that the classification algorithms are configured to receive the human feedback and trigger feedback loops where applicable; and/or (8) train extractors by ensuring that the extraction algorithms are configured to receive the human feedback and trigger feedback loops where applicable.

The DPF of some embodiments also includes a public package that can be used by software developers (e.g., developers from third-party companies or individual contributors) to manage the DPF and build their own document processing components including, but not limited to, classifier and extractor components. The public package in some embodiments may include, but are not limited to: (1) taxonomy, document, and extraction results data structures, along with functionality to assist in managing these structures; (2) abstract classes and interfaces to be used for building custom classifier and extractor components; and/or (3) data extraction and classification input and output data structures and contracts to be used when reporting classification or data extraction outputs. This public package may ensure that the entire DPF is fully scalable, open, and usable by third parties to develop use case-specific or solution-specific components in a unified manner that are fully compatible with the DPF.

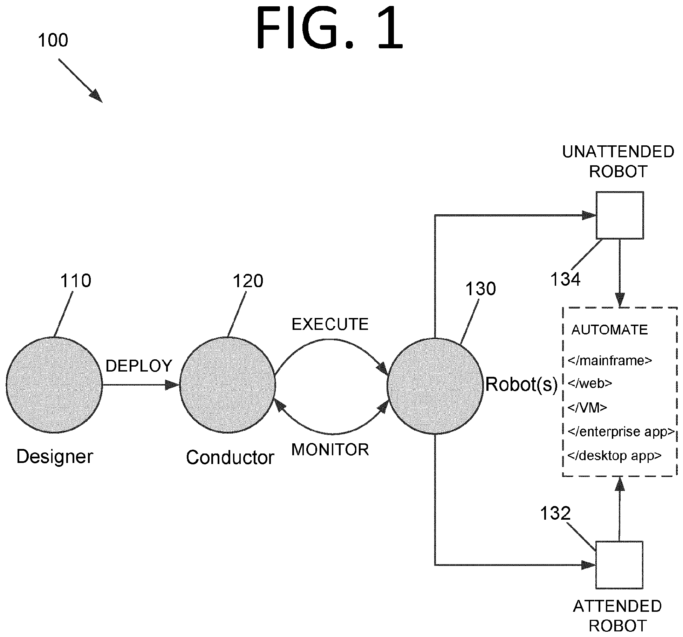

FIG. 1 is an architectural diagram illustrating an RPA system 100, according to an embodiment of the present invention. RPA system 100 includes a designer 110 that allows a developer to design and implement workflows. Designer 110 may provide a solution for application integration, as well as automating third-party applications, administrative Information Technology (IT) tasks, and business IT processes. Designer 110 may facilitate development of an automation project, which is a graphical representation of a business process. Simply put, designer 110 facilitates the development and deployment of workflows and robots.

The automation project enables automation of rule-based processes by giving the developer control of the execution order and the relationship between a custom set of steps developed in a workflow, defined herein as "activities." One commercial example of an embodiment of designer 110 is UiPath Studio^{™}. Each activity may include an action, such as clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable to more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow is developed in designer 110, execution of business processes is orchestrated by conductor 120, which orchestrates one or more robots 130 that execute the workflows developed in designer 110. One commercial example of an embodiment of conductor 120 is UiPath Orchestrator^{™}. Conductor 120 facilitates management of the creation, monitoring, and deployment of resources in an environment. Conductor 120 may act as an integration point with third-party solutions and applications.

Conductor 120 may manage a fleet of robots 130, connecting and executing robots 130 from a centralized point. Types of robots 130 that may be managed include, but are not limited to, attended robots 132, unattended robots 134, development robots (similar to unattended robots 134, but used for development and testing purposes), and nonproduction robots (similar to attended robots 132, but used for development and testing purposes). Attended robots 132 are triggered by user events and operate alongside a human on the same computing system. Attended robots 132 may be used with conductor 120 for a centralized process deployment and logging medium. Attended robots 132 may help the human user accomplish various tasks, and may be triggered by user events. In some embodiments, processes cannot be started from conductor 120 on this type of robot and/or they cannot run under a locked screen. In certain embodiments, attended robots 132 can only be started from a robot tray or from a command prompt. Attended robots 132 should run under human supervision in some embodiments.

Unattended robots 134 run unattended in virtual environments and can automate many processes. Unattended robots 134 may be responsible for remote execution, monitoring, scheduling, and providing support for work queues. Debugging for all robot types may be run in designer 110 in some embodiments. Both attended and unattended robots may automate various systems and applications including, but not limited to, mainframes, web applications, VMs, enterprise applications (e.g., those produced by SAP^{®}, SalesForce^{®}, Oracle^{®}, etc.), and computing system applications (e.g., desktop and laptop applications, mobile device applications, wearable computer applications, etc.).

Conductor 120 may have various capabilities including, but not limited to, provisioning, deployment, configuration, queueing, monitoring, logging, and/or providing interconnectivity. Provisioning may include creating and maintenance of connections between robots 130 and conductor 120 (e.g., a web application). Deployment may include assuring the correct delivery of package versions to assigned robots 130 for execution. Configuration may include maintenance and delivery of robot environments and process configurations. Queueing may include providing management of queues and queue items. Monitoring may include keeping track of robot identification data and maintaining user permissions. Logging may include storing and indexing logs to a database (e.g., an SQL database) and/or another storage mechanism (e.g., ElasticSearch^{®}, which provides the ability to store and quickly query large datasets). Conductor 120 may provide interconnectivity by acting as the centralized point of communication for third-party solutions and/or applications.

Robots 130 are execution agents that run workflows built in designer 110. One commercial example of some embodiments of robot(s) 130 is UiPath Robots^{™}. In some embodiments, robots 130 install the Microsoft Windows^{®} Service Control Manager (SCM)-managed service by default. As a result, such robots 130 can open interactive Windows^{®} sessions under the local system account, and have the rights of a Windows^{®} service.

In some embodiments, robots 130 can be installed in a user mode. For such robots 130, this means they have the same rights as the user under which a given robot 130 has been installed. This feature may also be available for High Density (HD) robots, which ensure full utilization of each machine at its maximum potential. In some embodiments, any type of robot 130 may be configured in an HD environment.

Robots 130 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows^{®} sessions and act as a proxy between conductor 120 and the execution hosts (i.e., the computing systems on which robots 130 are executed). These services are trusted with and manage the credentials for robots 130. A console application is launched by the SCM under the local system.

User mode robot services in some embodiments manage and monitor Windows^{®} sessions and act as a proxy between conductor 120 and the execution hosts. User mode robot services may be trusted with and manage the credentials for robots 130. A Windows^{®} application may automatically be launched if the SCM-managed robot service is not installed.

Executors may run given jobs under a Windows^{®} session (i.e., they may execute workflows. Executors may be aware of per-monitor dots per inch (DPI) settings. Agents may be Windows^{®} Presentation Foundation (WPF) applications that display the available jobs in the system tray window. Agents may be a client of the service. Agents may request to start or stop jobs and change settings. The command line is a client of the service. The command line is a console application that can request to start jobs and waits for their output.

Having components of robots 130 split as explained above helps developers, support users, and computing systems more easily run, identify, and track what each component is executing. Special behaviors may be configured per component this way, such as setting up different firewall rules for the executor and the service. The executor may always be aware of DPI settings per monitor in some embodiments. As a result, workflows may be executed at any DPI, regardless of the configuration of the computing system on which they were created. Projects from designer 110 may also be independent of browser zoom level in some embodiments. For applications that are DPI-unaware or intentionally marked as unaware, DPI may be disabled in some embodiments.

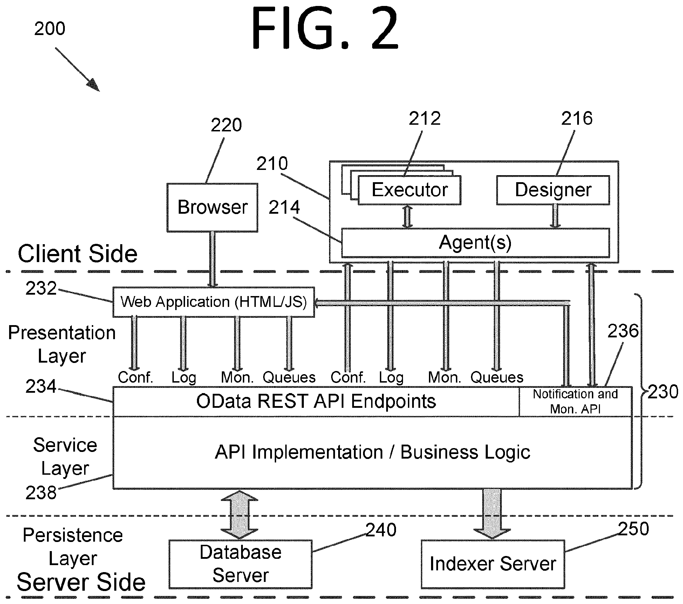

FIG. 2 is an architectural diagram illustrating a deployed RPA system 200, according to an embodiment of the present invention. In some embodiments, RPA system 200 may be, or may be a part of, RPA system 100 of FIG. 1. It should be noted that the client side, the server side, or both, may include any desired number of computing systems without deviating from the scope of the invention. On the client side, a robot application 210 includes executors 212, an agent 214, and a designer 216. However, in some embodiments, designer 216 may not be running on computing system 210. Executors 212 are running processes. Several business projects may run simultaneously, as shown in FIG. 2. Agent 214 (e.g., a Windows^{®} service) is the single point of contact for all executors 212 in this embodiment. All messages in this embodiment are logged into conductor 230, which processes them further via database server 240, indexer server 250, or both. As discussed above with respect to FIG. 1, executors 212 may be robot components.

In some embodiments, a robot represents an association between a machine name and a username. The robot may manage multiple executors at the same time. On computing systems that support multiple interactive sessions running simultaneously (e.g., Windows^{®} Server 2012), there may be multiple robots running at the same time, each in a separate Windows^{®} session using a unique username. This is referred to as HD robots above.

Agent 214 is also responsible for sending the status of the robot (e.g., periodically sending a "heartbeat" message indicating that the robot is still functioning) and downloading the required version of the package to be executed. The communication between agent 214 and conductor 230 is always initiated by agent 214 in some embodiments. In the notification scenario, agent 214 may open a WebSocket channel that is later used by conductor 230 to send commands to the robot (e.g., start, stop, etc.).

On the server side, a presentation layer (web application 232, Open Data Protocol (OData) Representative State Transfer (REST) Application Programming Interface (API) endpoints 234, and notification and monitoring 236), a service layer (API implementation / business logic 238), and a persistence layer (database server 240 and indexer server 250) are included. Conductor 230 includes web application 232, OData REST API endpoints 234, notification and monitoring 236, and API implementation / business logic 238. In some embodiments, most actions that a user performs in the interface of conductor 230 (e.g., via browser 220) are performed by calling various APIs. Such actions may include, but are not limited to, starting jobs on robots, adding/removing data in queues, scheduling jobs to run unattended, etc. without deviating from the scope of the invention. Web application 232 is the visual layer of the server platform. In this embodiment, web application 232 uses Hypertext Markup Language (HTML) and JavaScript (JS). However, any desired markup languages, script languages, or any other formats may be used without deviating from the scope of the invention. The user interacts with web pages from web application 232 via browser 220 in this embodiment in order to perform various actions to control conductor 230. For instance, the user may create robot groups, assign packages to the robots, analyze logs per robot and/or per process, start and stop robots, etc.

In addition to web application 232, conductor 230 also includes service layer that exposes OData REST API endpoints 234. However, other endpoints may be included without deviating from the scope of the invention. The REST API is consumed by both web application 232 and agent 214. Agent 214 is the supervisor of one or more robots on the client computer in this embodiment.

The REST API in this embodiment covers configuration, logging, monitoring, and queueing functionality. The configuration endpoints may be used to define and configure application users, permissions, robots, assets, releases, and environments in some embodiments. Logging REST endpoints may be used to log different information, such as errors, explicit messages sent by the robots, and other environment-specific information, for instance. Deployment REST endpoints may be used by the robots to query the package version that should be executed if the start job command is used in conductor 230. Queueing REST endpoints may be responsible for queues and queue item management, such as adding data to a queue, obtaining a transaction from the queue, setting the status of a transaction, etc.

Monitoring REST endpoints may monitor web application 232 and agent 214. Notification and monitoring API 236 may be REST endpoints that are used for registering agent 214, delivering configuration settings to agent 214, and for sending/receiving notifications from the server and agent 214. Notification and monitoring API 236 may also use WebSocket communication in some embodiments.

The persistence layer includes a pair of servers in this embodiment - database server 240 (e.g., a SQL server) and indexer server 250. Database server 240 in this embodiment stores the configurations of the robots, robot groups, associated processes, users, roles, schedules, etc. This information is managed through web application 232 in some embodiments. Database server 240 may manages queues and queue items. In some embodiments, database server 240 may store messages logged by the robots (in addition to or in lieu of indexer server 250).

Indexer server 250, which is optional in some embodiments, stores and indexes the information logged by the robots. In certain embodiments, indexer server 250 may be disabled through configuration settings. In some embodiments, indexer server 250 uses ElasticSearch^{®}, which is an open source project full-text search engine. Messages logged by robots (e.g., using activities like log message or write line) may be sent through the logging REST endpoint(s) to indexer server 250, where they are indexed for future utilization.

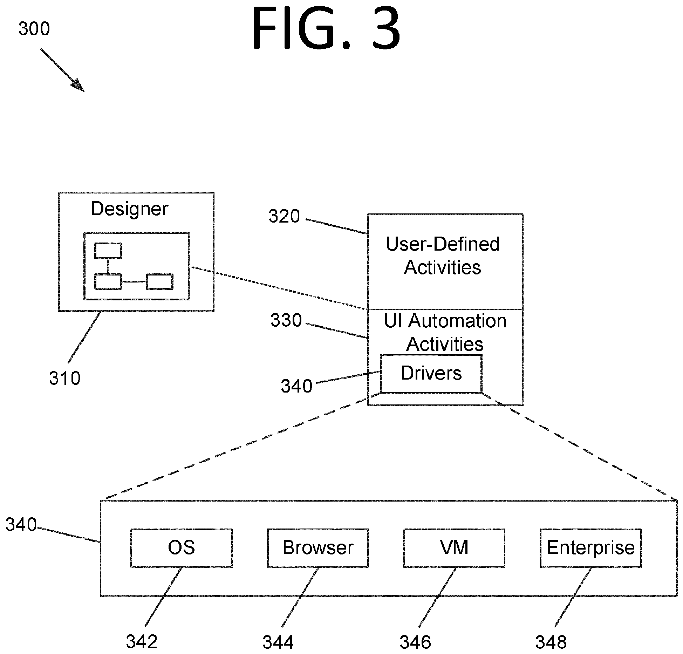

FIG. 3 is an architectural diagram illustrating the relationship 300 between a designer 310, activities 320, 330, and drivers 340, according to an embodiment of the present invention. Per the above, a developer uses designer 310 to develop workflows that are executed by robots. Workflows may include user-defined activities 320 and UI automation activities 330. Some embodiments are able to identify non-textual visual components in an image, which is called computer vision (CV) herein. Some CV activities pertaining to such components may include, but are not limited to, click, type, get text, hover, element exists, refresh scope, highlight, etc. Click in some embodiments identifies an element using CV, optical character recognition (OCR), fuzzy text matching, and multi-anchor, for example, and clicks it. Type may identify an element using the above and types in the element. Get text may identify the location of specific text and scan it using OCR. Hover may identify an element and hover over it. Element exists may check whether an element exists on the screen using the techniques described above. In some embodiments, there may be hundreds or even thousands of activities that can be implemented in designer 310. However, any number and/or type of activities may be available without deviating from the scope of the invention.

UI automation activities 330 are a subset of special, lower level activities that are written in lower level code (e.g., CV activities) and facilitate interactions with the screen. UI automation activities 330 facilitate these interactions via drivers 340 that allow the robot to interact with the desired software. For instance, drivers 340 may include OS drivers 342, browser drivers 344, VM drivers 346, enterprise application drivers 348, etc.

Drivers 340 may interact with the OS at a low level looking for hooks, monitoring for keys, etc. They may facilitate integration with Chrome^{®}, IE^{®}, Citrix^{®}, SAP^{®}, etc. For instance, the "click" activity performs the same role in these different applications via drivers 340.

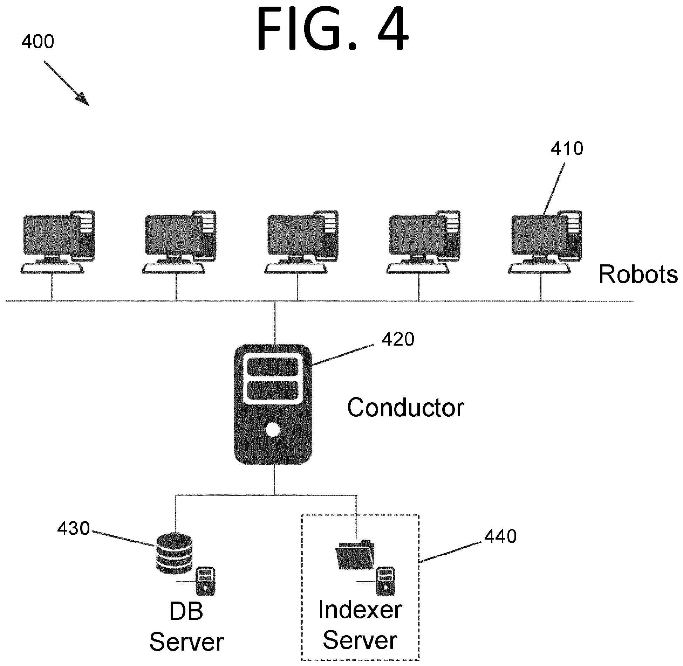

FIG. 4 is an architectural diagram illustrating an RPA system 400, according to an embodiment of the present invention. In some embodiments, RPA system 400 may be or include RPA systems 100 and/or 200 of FIGS. 1 and/or 2. RPA system 400 includes multiple client computing systems 410 running robots. Computing systems 410 are able to communicate with a conductor computing system 420 via a web application running thereon. Conductor computing system 420, in turn, is able to communicate with a database server 430 and an optional indexer server 440.

With respect to FIGS. 1 and 3, it should be noted that while a web application is used in these embodiments, any suitable client/server software may be used without deviating from the scope of the invention. For instance, the conductor may run a server-side application that communicates with non-web-based client software applications on the client computing systems.

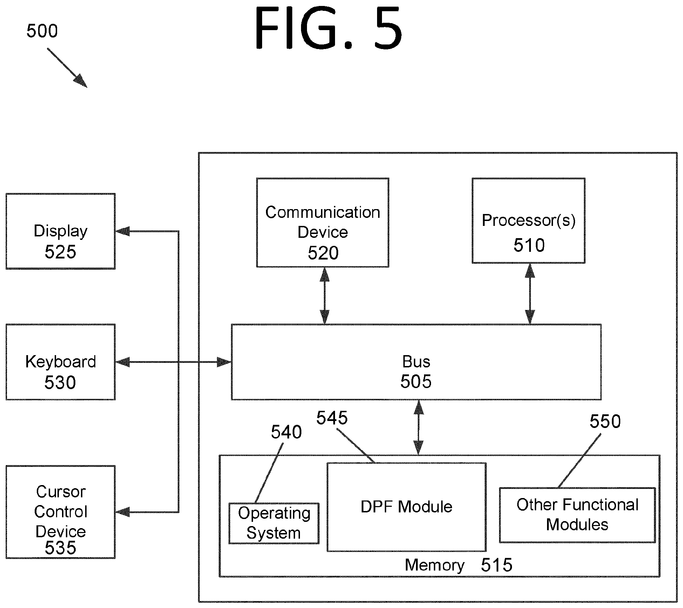

FIG. 5 is an architectural diagram illustrating a computing system 500 configured to provide a DPF for RPA, according to an embodiment of the present invention. In some embodiments, computing system 500 may be one or more of the computing systems depicted and/or described herein. Computing system 500 includes a bus 505 or other communication mechanism for communicating information, and processor(s) 510 coupled to bus 505 for processing information. Processor(s) 510 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 510 may also have multiple processing cores, and at least some of the cores may be configured to perform specific functions. Multi-parallel processing may be used in some embodiments. In certain embodiments, at least one of processor(s) 510 may be a neuromorphic circuit that includes processing elements that mimic biological neurons. In some embodiments, neuromorphic circuits may not require the typical components of a Von Neumann computing architecture.

Computing system 500 further includes a memory 515 for storing information and instructions to be executed by processor(s) 510. Memory 515 can be comprised of any combination of Random Access Memory (RAM), Read Only Memory (ROM), flash memory, cache, static storage such as a magnetic or optical disk, or any other types of non-transitory computer-readable media or combinations thereof. Non-transitory computer-readable media may be any available media that can be accessed by processor(s) 510 and may include volatile media, non-volatile media, or both. The media may also be removable, non-removable, or both.

Additionally, computing system 500 includes a communication device 520, such as a transceiver, to provide access to a communications network via a wireless and/or wired connection. In some embodiments, communication device 520 may be configured to use Frequency Division Multiple Access (FDMA), Single Carrier FDMA (SC-FDMA), Time Division Multiple Access (TDMA), Code Division Multiple Access (CDMA), Orthogonal Frequency Division Multiplexing (OFDM), Orthogonal Frequency Division Multiple Access (OFDMA), Global System for Mobile (GSM) communications, General Packet Radio Service (GPRS), Universal Mobile Telecommunications System (UMTS), cdma2000, Wideband CDMA (W-CDMA), High-Speed Downlink Packet Access (HSDPA), High-Speed Uplink Packet Access (HSUPA), High-Speed Packet Access (HSPA), Long Term Evolution (LTE), LTE Advanced (LTE-A), 802.11x, Wi-Fi, Zigbee, Ultra-WideBand (UWB), 802.16x, 802.15, Home Node-B (HnB), Bluetooth, Radio Frequency Identification (RFID), Infrared Data Association (IrDA), Near-Field Communications (NFC), fifth generation (5G), New Radio (NR), any combination thereof, and/or any other currently existing or future-implemented communications standard and/or protocol without deviating from the scope of the invention. In some embodiments, communication device 520 may include one or more antennas that are singular, arrayed, phased, switched, beamforming, beamsteering, a combination thereof, and or any other antenna configuration without deviating from the scope of the invention.

Processor(s) 510 are further coupled via bus 505 to a display 525, such as a plasma display, a Liquid Crystal Display (LCD), a Light Emitting Diode (LED) display, a Field Emission Display (FED), an Organic Light Emitting Diode (OLED) display, a flexible OLED display, a flexible substrate display, a projection display, a 4K display, a high definition display, a Retina^{®} display, an In-Plane Switching (IPS) display, or any other suitable display for displaying information to a user. Display 525 may be configured as a touch (haptic) display, a three dimensional (3D) touch display, a multi-input touch display, a multi-touch display, etc. using resistive, capacitive, surface-acoustic wave (SAW) capacitive, infrared, optical imaging, dispersive signal technology, acoustic pulse recognition, frustrated total internal reflection, etc. Any suitable display device and haptic I/O may be used without deviating from the scope of the invention.

A keyboard 530 and a cursor control device 535, such as a computer mouse, a touchpad, etc., are further coupled to bus 505 to enable a user to interface with computing system. However, in certain embodiments, a physical keyboard and mouse may not be present, and the user may interact with the device solely through display 525 and/or a touchpad (not shown). Any type and combination of input devices may be used as a matter of design choice. In certain embodiments, no physical input device and/or display is present. For instance, the user may interact with computing system 500 remotely via another computing system in communication therewith, or computing system 500 may operate autonomously.

Memory 515 stores software modules that provide functionality when executed by processor(s) 510. The modules include an operating system 540 for computing system 500. The modules further include a DPF module 545 that is configured to perform all or part of the processes described herein or derivatives thereof. Computing system 500 may include one or more additional functional modules 550 that include additional functionality.

One skilled in the art will appreciate that a "system" could be embodied as a server, an embedded computing system, a personal computer, a console, a personal digital assistant (PDA), a cell phone, a tablet computing device, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

### DEFINING AND MANAGING THE TAXONOMY

Before designing the workflow for document processing, the DPF of some embodiments allows users to define a list of document types targeted for classification and data extraction, along with associated fields for each of the document types (i.e., information to be searched for in the documents and associated types). This may be accomplished using a taxonomy manager in some embodiments. The defined taxonomy information may be stored as a master taxonomy in a public proprietary data structure, defined as a class in a public package, that can be used programmatically by both software developers and RPA developers to manipulate taxonomy objects. In some embodiments, this class may be DocumentTaxonomy in UiPath Studio^{™}, for example.

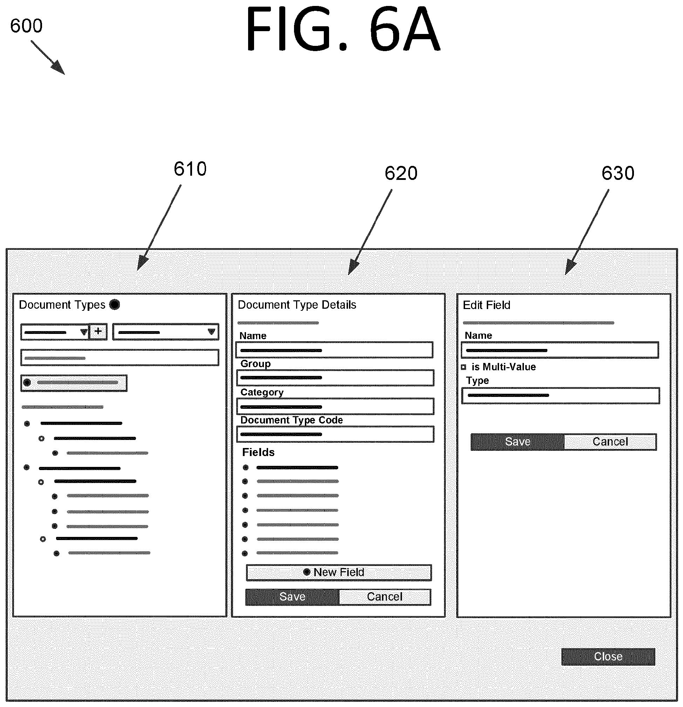

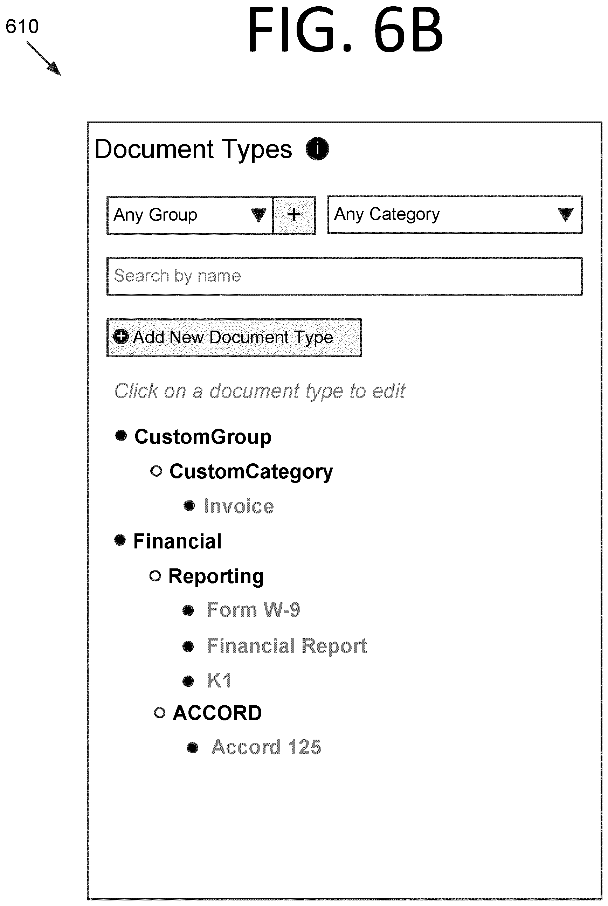

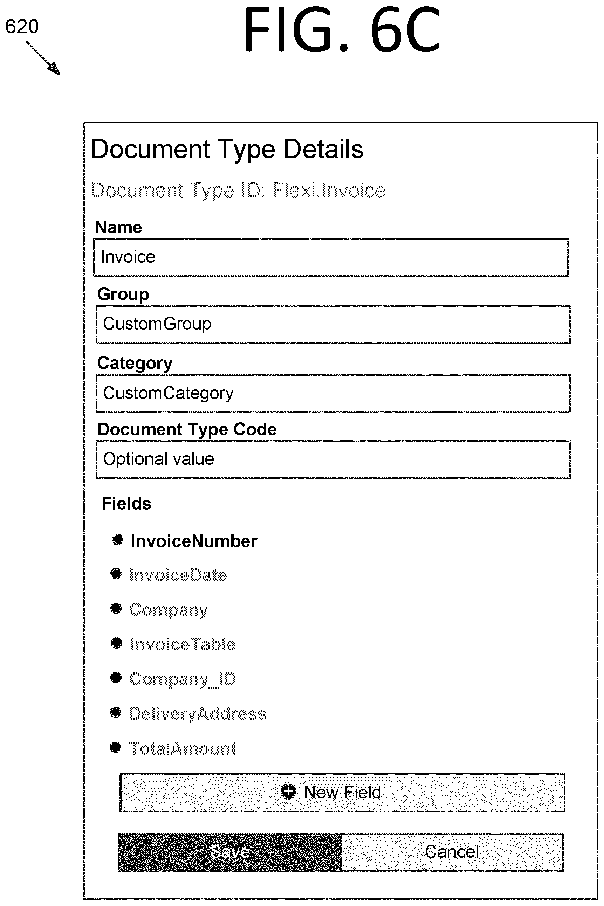

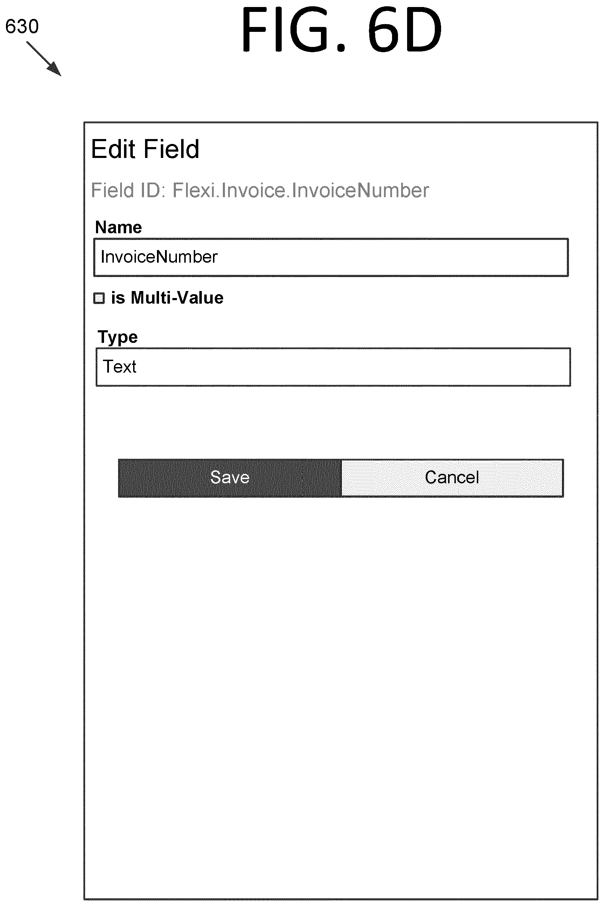

FIGS. 6A-D are screenshots illustrating a taxonomy manager 600, according to an embodiment of the present invention. Taxonomy manager 600 includes a document types definition interface 610 (see also FIG. 6B), a document type details interface 620 (see also FIG. 6C), and an edit field interface 630 (see also FIG. 6D). Collectively, interfaces 610, 620, 630 allow a user to define a list of document types, provide document type details, and edit the fields the document types.

Document types definition interface 610 allows the user to add new document types or edit or remove existing document types. The interface also provides functionality to select groups and categories, as well as to search for groups and categories. Groups and categories are used in this embodiment to better organize the collection of document types in the taxonomy. Group and category filtering may be available based on these settings in interface 610 (see also FIG. 6B). Each document type can be assigned to a group and a category via interface 620 (see also FIG. 6C). Taxonomy organization (e.g., by groups, categories, document types, fields, etc.) may change over time while retaining the same purpose of capturing document processing metadata. Furthermore, the data structures, user interfaces, and public contracts may also evolve in design, packaging, content, functionality, etc.

Document type details interface 620 allows the user to provide a name for a document type, as well as to select a group and category for the document type. A document type code may also be optionally specified. Fields associated with the document type are shown, and the user can add, edit, or remove fields as well.

Edit field interface 630 allows the user to edit the properties of a given field. Available properties may vary based on multiple factors that may include, but are not limited to, field type, category, group, etc.

### DIGITIZING FILES

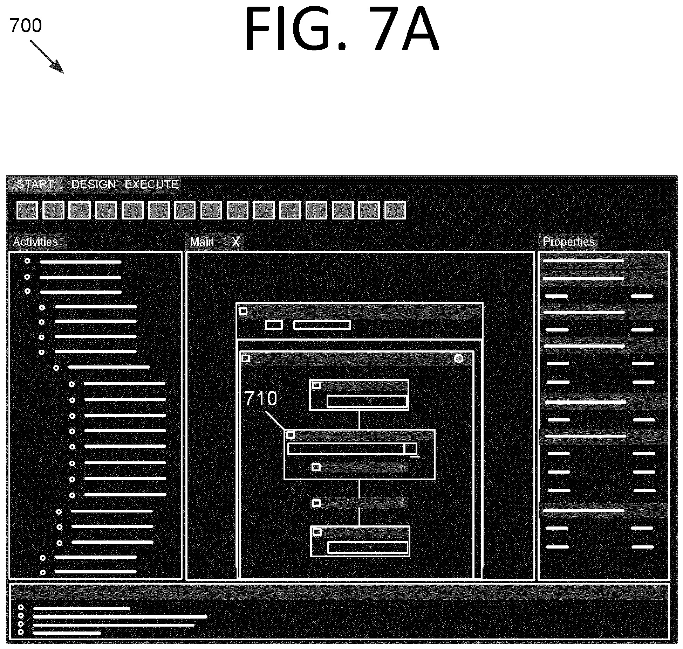

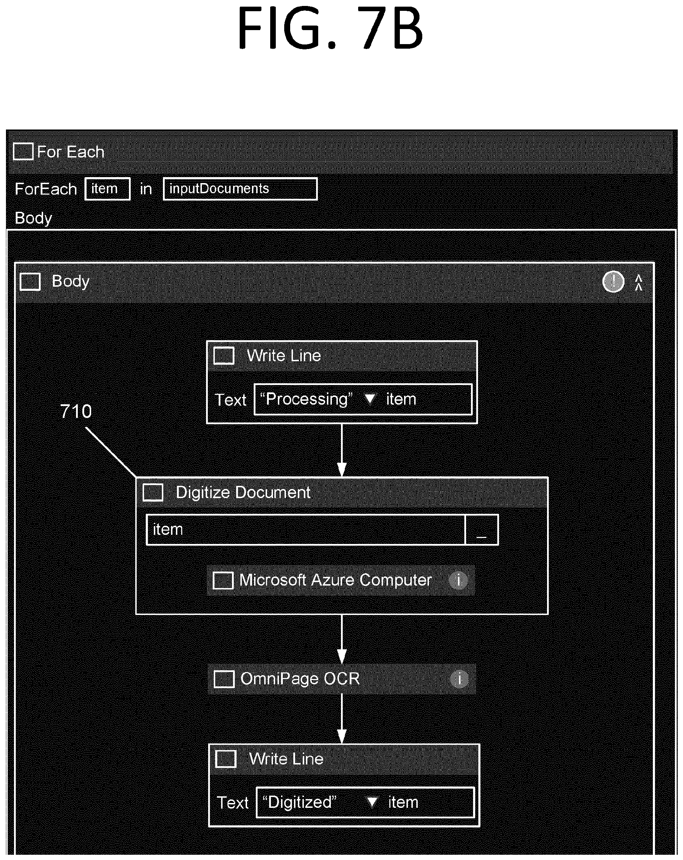

In some embodiments, digitization of a file may be performed using a digitization activity 710 in a workflow of an RPA tool 700 (e.g., UiPath Studio^{™}) that outputs a text version of the processed file, along with a Document Object Model (DOM). See FIGS. 7A and 7B. The DOM may be captured in a proprietary data structure of the RPA tool that may be defined as a class in a public package. This class may be used programmatically by both software developers and RPA developers to manipulate DOM objects. DOM captures information about what a file contains for each page, with typed sections (e.g., paragraphs, tables, columns, vertical text, headers, headings, footers, etc.), typed word groups (e.g., sentences, table cells, etc.), and word level information (e.g., absolute positioning on each page, OCR confidence, content, etc.), all enhanced with rotation, skew, relative width and height information, etc.

The file digitization component may be built with a plug-and-play functionality related to the OCR engine to be used, such that any suitable OCR engine implementation respecting the defined contract enforced by the document processing framework can be used. The digitization component may also be enhanced to allow the usage of multiple OCR engines and implement a voting system to report the best combined result of all engines used. For instance, the result that the most OCR engines agree on may be selected. In certain embodiments, such results may be weighted based on the accuracy of a given OCR system. However, it should be noted that in some embodiments, the voting/OCR result aggregation algorithm may employ any type of metric or confidence computation, based or not on human feedback, to determine and report the best available textual output without deviating from the scope of the invention.

### CLASSIFYING FILES INTO ONE OR MORE DOCUMENT TYPES

This functionality allows a user to use one or more desired classifier algorithms for document classification. Examples of classification algorithms include, but are not limited to, layout-based classification, sentiment-based classification, feature-based classification, natural language processing (NLP)-based classification, machine learning (ML)-based classification, deep learning-based classification, image-based classification, keyword-based classification, and color-based classification. The user can add any number of classifier implementations as plug-ins, delete, change, interchange, and change the order of the classifiers in some embodiments. In certain embodiments, multiple different classifiers of the same type (e.g., multiple image-based classifiers) may be used. In some embodiments, the user can define acceptance criteria based on minimum confidence thresholds for each classifier that is used.

In some embodiments, the user can perform a taxonomy mapping from a master taxonomy (e.g., one designed and defined using the taxonomy manager in some embodiments) and any internal taxonomy for a given classifier for the purpose of bringing all data to a common denominator in a unified manner. This functionality may be used when a given classifier reports an internal set of "classes" (e.g., document types) as a result of classification that should be mapped (translated) to the master taxonomy. For example, a classifier may report class "INV" when an incoming document is an invoice, while the master taxonomy may contain a document type called "Expense Invoice." This functionality allows the specification that "INV" reported from the classifier corresponds to an "Expense Invoice" defined in the master taxonomy.

In certain embodiments, the user can decide on the priority of results from each classifier component that is used. In some embodiments, the user can also decide which classifier components are allowed to resolve certain document types and which are restricted from doing so. This functionality allows fine tuning of document classification, given the known features and limitations of each classifier implementation (i.e., component) used in a specific use case.

The document classification functionality may also ensure the same type of output regardless of the classifier(s) used based on the digitized file and the taxonomy. The output of the document classification functionality may be captured in a proprietary data structure that is defined as a class in a public package. The class may be used programmatically by both software developers and RPA developers to manipulate classification results objects. In some embodiments, these classes may be ClassifierResult and ClassificationResult defined in the public data contracts package in UiPath Studio^{™}. Certain embodiments may include the implementation of more complex results brokerage systems between different classifier components to automatically decide which results are better, as well as a system for combining results from different classifier components for different page ranges. This functionality may be used for file splitting into multiple logical documents. For example, in the case where a single file contains a package of documents where the documents are scanned one after the other within the same PDF file.

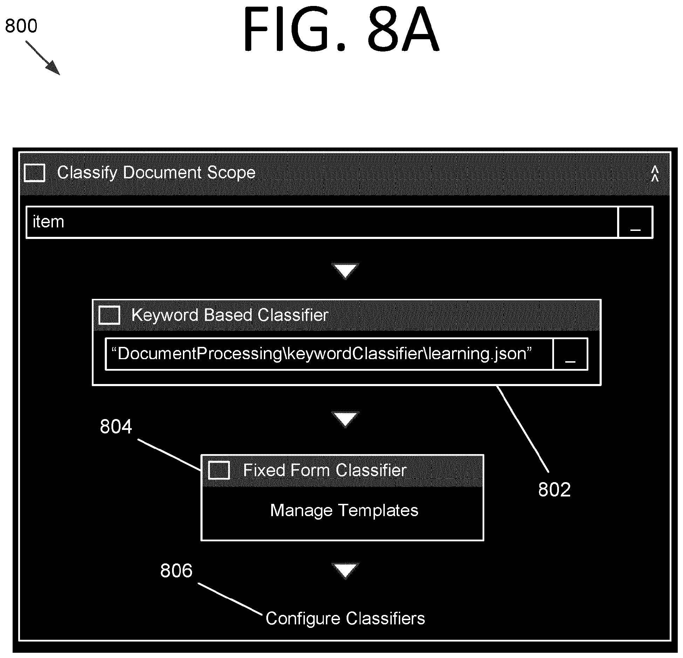

FIG. 8A is a screenshot illustrating a classify document scope workflow 800. Workflow 800 includes a keyword-based classifier activity 802 and a fixed form classifier activity 804. A user can configure the classifiers in workflow 800 by clicking on a configure classifiers link 806. The classify document scope component can be configured with any desired number of classifiers in some embodiments.

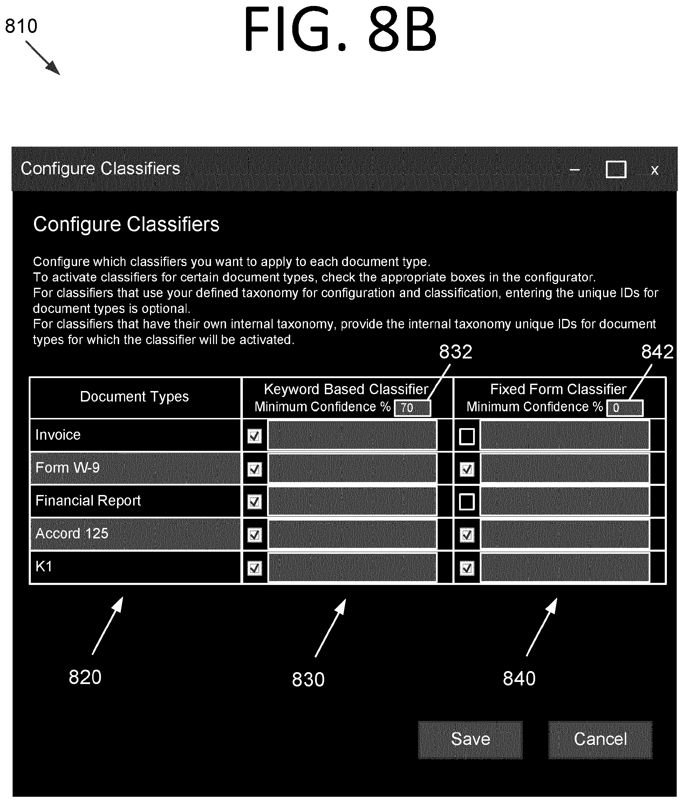

Clicking configure classifiers link 806 opens classifier configuration interface 810 of FIG. 8B, which provides a list of document types 820 that may be processed in the first column of the configuration table, while the following columns each correspond to one classifier used in the scope in the order in which they are configured in the scope component. In this example, a keyword-based classifier configuration pane 830 and a fixed form classifier configuration pane 840 allow a user to set a minimum confidence 832, 842 for each. Classification results from each classifier may be filtered based on the minimum confidence threshold set for each classifier individually. The user can also select whether to apply one, both, or no classifiers to each document type via checkboxes in the classifier configuration (here, keyword-based classifier configuration pane 830 and fixed form classifier configuration pane 840). The user can also optionally enter internal taxonomy unique IDs for document types where each classifier is using an internal taxonomy in the text fields next to the checkboxes.

In some embodiments, the classify document scope activity may allow setting of minimum confidence thresholds not only per classifier, but also at a classifier and document type level. In certain embodiments, the classify document scope activity, the classifier configuration, the prioritization algorithm, the user interfaces, the data structures, and the public contracts may experience changes and adjustments while retaining the same purpose of facilitating document classification in an open and extensible framework.

### VALIDATING AUTOMATIC CLASSIFICATION

In some embodiments, a classification validation module offers a user interface for reviewing, correcting, and/or manually processing files for classification. Users may be able to review automatic classification by viewing ranges of pages from a processed file and the automatically associated document type, perform corrections at both the page range and document type level, delete or add new sections with associated document types, and/or fully manually process documents if desired.

The user interface of some embodiments is straightforward to use and offers a visual approach to understanding and making judgements about each individual page in a file. The user interface in some embodiments is available for usage independent of the classification components used in the previous automatic classification phase, providing a single, unified, state-of-the-art user interface for document classification review and processing. This approach may eliminate the need for humans to learn and use different screens for document classification dependent on the classification techniques that are employed, thus unifying the overall experience and decreasing the learning curve and overall time required for document processing.

### AUTOMATICALLY EXTRACTING DATA FROM DOCUMENTS

The automatic data extraction functionality allows extractors in the workflow to be used interchangeably. Such embodiments may ensure standard inputs, standard outputs, brokerage between the extractors, and fallback mechanisms. Some examples of extractors may include, but are not limited to, template-based extractors, layout-based extractors, keyword-based extractors, regular expression-based extractors, context-based extractors, label/anchor-based extractors, pattern-based extractors, natural language processing-based extractors, machine learning extractors, metadata-based extractors, etc.

In some embodiments, the user can add any desired number of extractor implementations as plug-ins. In certain embodiments, the user may be able to delete, change, interchange, and change the order of the extractors. In some embodiments, the user can define acceptance criteria based on minimum confidence thresholds for each extractor that is used. In some embodiments, the user can define acceptance criteria based on minimum confidence thresholds for each field/extractor combination.

In some embodiments, the user can perform a taxonomy mapping from the master taxonomy (e.g., one designed and defined using the taxonomy manager in some embodiments) and one or more extractor internal taxonomies for the purpose of bringing all data to a common denominator in a unified manner. This functionality may be used when a given extractor reports an internal set of "capabilities" (i.e., fields the extractor can extract) as a result of data extraction that should be mapped (translated) to the master taxonomy. The user may decide the priority of the results from each extractor that is used. For example, an extractor may report values for a field called "INV-NO" when processing invoices, while the master taxonomy may contain a field called "Invoice Number." This functionality allows the specification that "INV-NO" reported from the extractor corresponds to an "Invoice Number" defined in the master taxonomy.

The user may also decide which extractor components are allowed to resolve certain fields and which are restricted from doing so. These functionalities allow fine tuning of document extraction given the known features and limitations of each extractor implementation (i.e., component) used in a specific use case. The extractors may be implemented as activities in an RPA workflow in some embodiments.

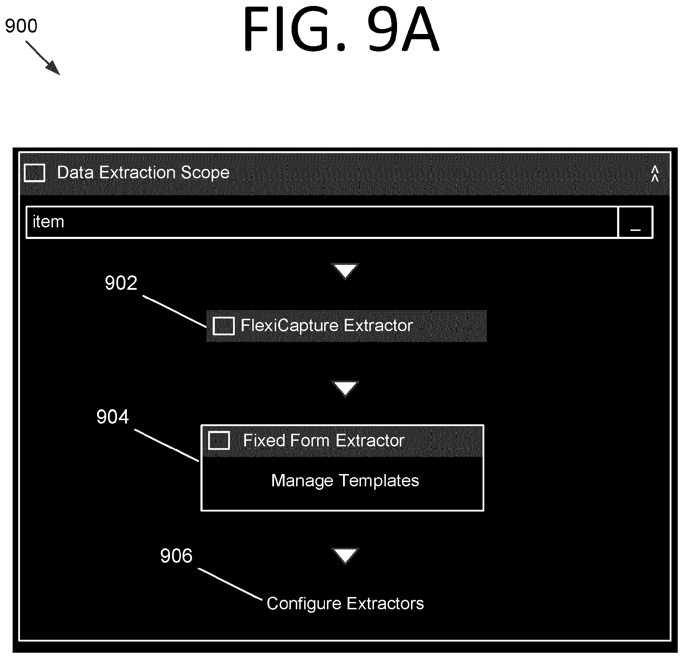

FIG. 9A is a screenshot illustrating a data extraction scope workflow 900. Workflow 900 includes a FlexiCapture^{™} extractor activity 902 and a fixed form extractor activity 904. A user can configure the extractors in workflow 900 by clicking on a configure extractors link 906.

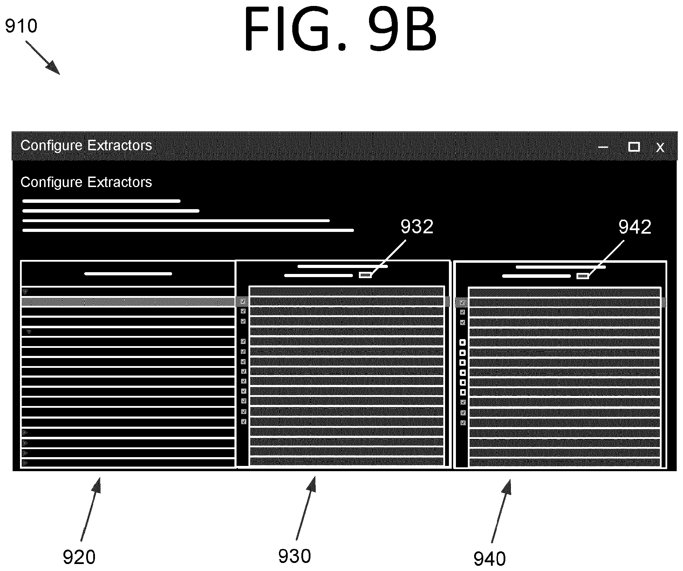

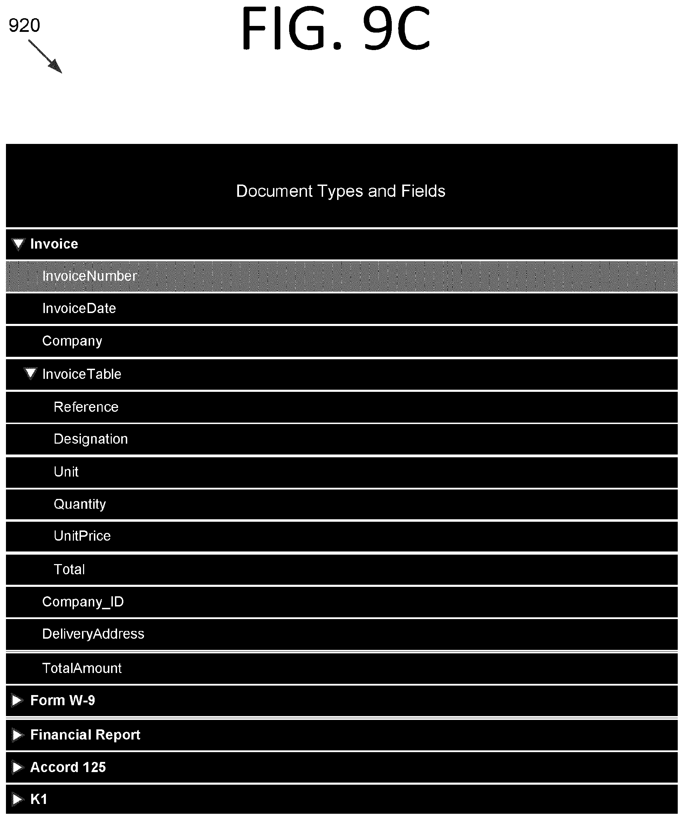

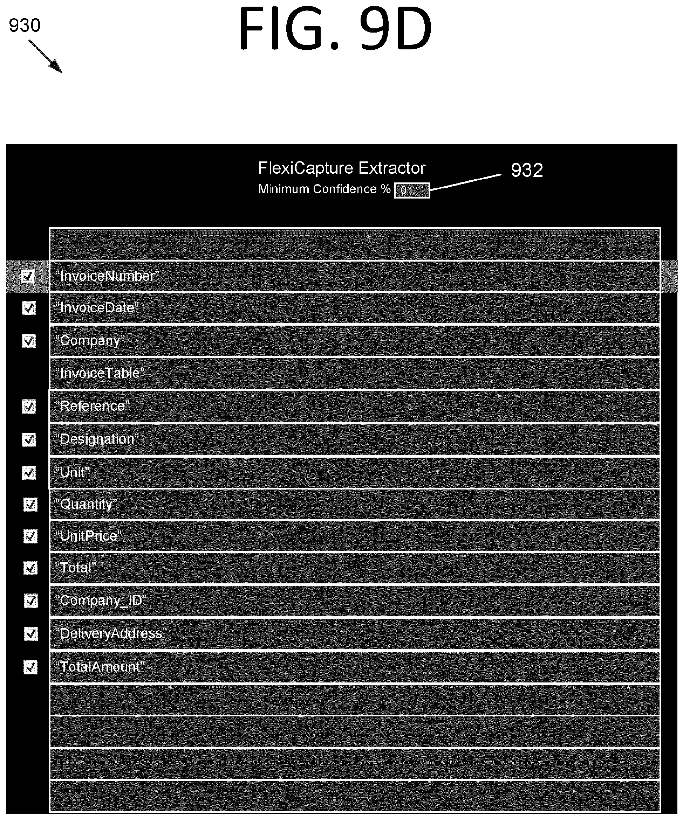

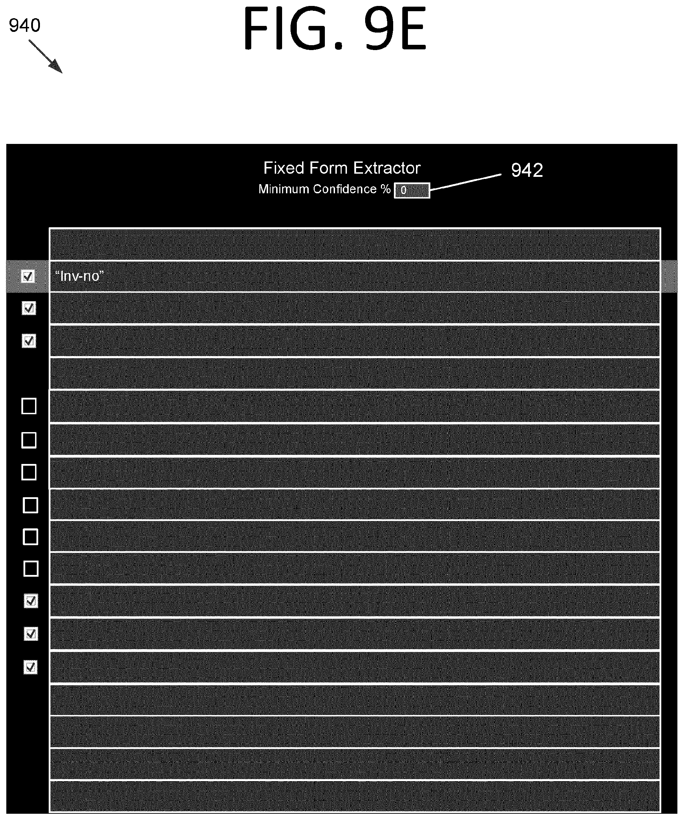

Clicking configure extractors link 906 opens extractor configuration interface 910 of FIG. 9B. Document types and fields from the master taxonomy can be viewed in a document types and fields pane 920 (see also FIG. 9C), where fields (e.g., "InvoiceNumber") are grouped under their respective document type (e.g., "Invoice"). Extractors are applied on a per-field basis by selecting corresponding checkboxes in each extractor's pane (e.g., a FlexiCapture^{™} extractor pane 930 in this example (see also FIG. 9D)) and a fixed form extractor pane 940 (see also FIG. 9E). The minimum confidence percentage can also be specified via text fields 932, 942 in the extractor-specific panes (e.g., FlexiCapture^{™} extractor pane 930 and fixed form extractor pane 940, respectively).

The document extraction functionality in this embodiment ensures the same type of output irrespective of the extractor used based on the digitized file and the taxonomy. For example, FlexiCapture^{™} is a third party tool that has its own internal taxonomy. In order to bring every extractor to a common denominator, aliases can be added in this embodiment. For example, as shown below, the InvoiceNumber field in FlexiCapture^{™} extractor pane 930 is equal to "inv-no" in fixed form extractor pane 940. This may only need to be configured once, and the output of data extraction scope may then always extract data according to the master taxonomy that the developer has defined. The output of the document extraction functionality may be captured in a proprietary data structure defined as a class in a public package that can be used programmatically by both software developers and RPA developers to manipulate extraction result objects.

In some embodiments, these classes may be ExtractorResult and ExtractionResult defined in the public data contracts package of UiPath Studio^{™}, for example. Certain embodiments may include the implementation of more complex results brokerage systems between different extractor components to automatically decide which results are better, as well as a system for combining or chaining extractor processing from different extractor components for the same field. This functionality may be used for fine-grain data identification from larger identified sections. For example, in some embodiments, a first extractor may extract an entire sentence, while a chained second extractor may target the identification of a specific information from the sentence identified by the first extractor.

In short, the DPF of some embodiments takes a file and a classification result with page bounds, attempts to identify data for each associated field, uses the extraction algorithms included in the workflow, collects the results, and reports the best result for each field based on confidence, ordering, and extractor chaining. In the example of FIGS. 9A-E, two extractors are used - FlexiCapture^{™} extractor 902 and fixed form extractor 904. The document extraction module in this embodiment gives priority to a result returned by FlexiCapture^{™} extractor 902 over fixed form extractor 904 due to the ordering selected by the RPA developer between these two plugins in workflow 900. The document extraction module may not accept any reported extraction that is below a set confidence value (e.g. 70% for results reported by FlexiCapture^{™} extractor 902 if the user sets this value in minimum confidence field 932), while it will accept any classification reported by fixed form extractor 904 if minimum confidence field 942 is set to 0%. The document extraction module may look for an acceptable extraction performed by FlexiCapture^{™} extractor 902 and report that result, if acceptable. If no acceptable extraction is reported by FlexiCapture^{™} extractor 902, document extraction module may look for an acceptable extraction performed by fixed form extractor 904.

In some embodiments, the extraction results may be further enhanced with business-specific information or validation, specific formatting, and/or other post-processing. In certain embodiments, the output of the automatic data extraction component may be checked/corrected/enhanced using any other RPA workflow activities available in any desired combination. These activities may be used to manipulate the output of the automatic data extraction and may add, remove, or change certain values contained in the result. This may be used for complex use cases in which extracted data should be enhanced with information from a database or other sources external to a singular file processed at that time, for example.

### VALIDATING AUTOMATIC DATA EXTRACTION

In some embodiments, a data extraction validation module provides a user interface for reviewing, correcting, and/or manually processing data points (i.e., extracted information) reported by the data extraction module. Users may be able to review results from the automatic data extraction by: (1) viewing values, evidence, positions where the extracted value is found within the document, extracted value confidence, etc. from a processed part of a document (e.g., on certain page ranges as pertaining to classification); (2) performing corrections by editing OCR errors in a correctly reported value, correcting positioning of a reported value, replacing a reported value entirely, adding a value missed by automatic processing, and/or by removing a value wrongly identified by automatic processing; (3) directly interacting with a graphical representation of the original file being processed by performing operations through selections of range, area, word(s), etc. directly on the original file view; (4) viewing and performing operations on the text version of the document; and/or also (5) fully manually processing documents when desired.

The user interface of some embodiments is straightforward to use and offers a visual approach to understanding and making judgements about individual fields and pieces of data to be identified and extracted in a file. The user interface in certain embodiments can be made available for usage independent of the data extraction components used in the previous automatic classification and data extraction phases, providing a single, unified, state-of-the-art user interface for document data extraction review and processing. This approach may eliminate the need for humans to learn and use different screens for data validation dependent on the data extraction techniques that are employed, thus unifying the overall experience and decreasing the learning curve and overall time for document processing. The data validation component of some embodiments allows definition and use of custom validation rules that can be checked before allowing a human to submit a document processed through the document validation functionality. In this manner, the module may ensure full extensibility and be made open to custom implementations depending on the business use case to be covered.

### TRAINING CLASSIFIERS AND EXTRACTORS

In some embodiments, a classifier training module facilitates the completion of the feedback loop for classifiers capable of learning from human feedback. The classifier training module may ensure, in a unified manner, that human-validated data and the information that enables algorithms to learn from human feedback reach the activated classifiers in a form that is understandable by the respective classifiers (e.g., by using the taxonomy mapping functionality) and with the correct permissions enabled (e.g., by using the train classifiers activation functionality). This approach may provide a unified experience for closing the feedback loop independent of the classifier(s) that are used, and may also be independent of the classifier components used for actual file classification. This allows RPA developers, for example, to train classifiers before they are activated for actual file classification, thus enabling "on-the-fly" training and eliminating the need of large volumes of up-front annotated files specific to each classification component.

In some embodiments, an extractor training module facilitates the completion of the feedback loop for extractors capable of learning from human feedback. The extractor training module may ensure, in a unified manner, that human-validated data and information that enables algorithms to learn from human feedback reach the activated extractor(s) in a form understandable by the extractor(s) (e.g., by using the taxonomy mapping functionality) and with the correct permissions enabled (e.g., by using the train extractors field-level activation functionality). This approach may provide a unified experience for closing the feedback loop independent of which extractor component(s) are used, and may also be independent of the extractor components used for actual file processing for data extraction. This allows RPA developers, for example, to train extractors before they are activated for actual document data extraction, thus enabling "on-the-fly" training and eliminating the need of large volumes of up-front annotated files specific for each extraction component.

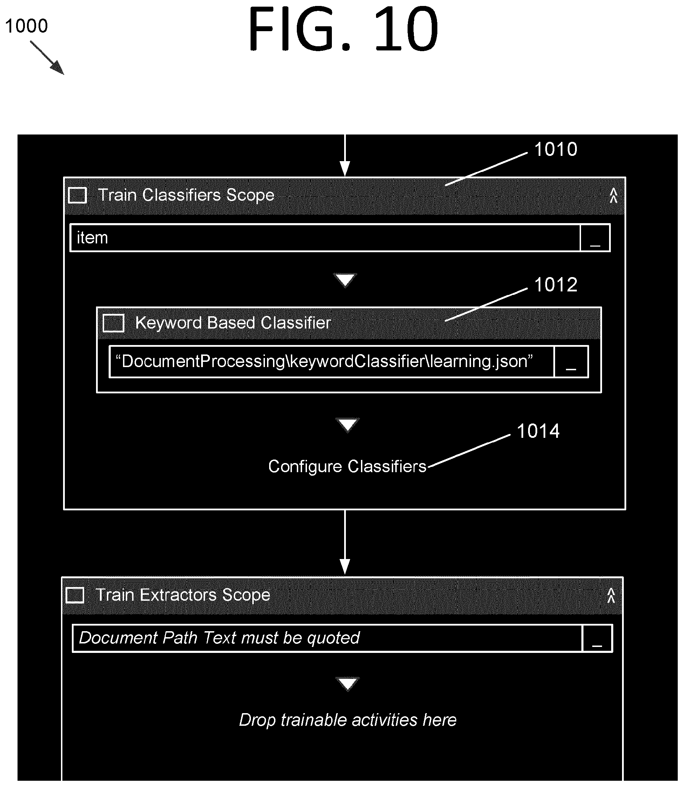

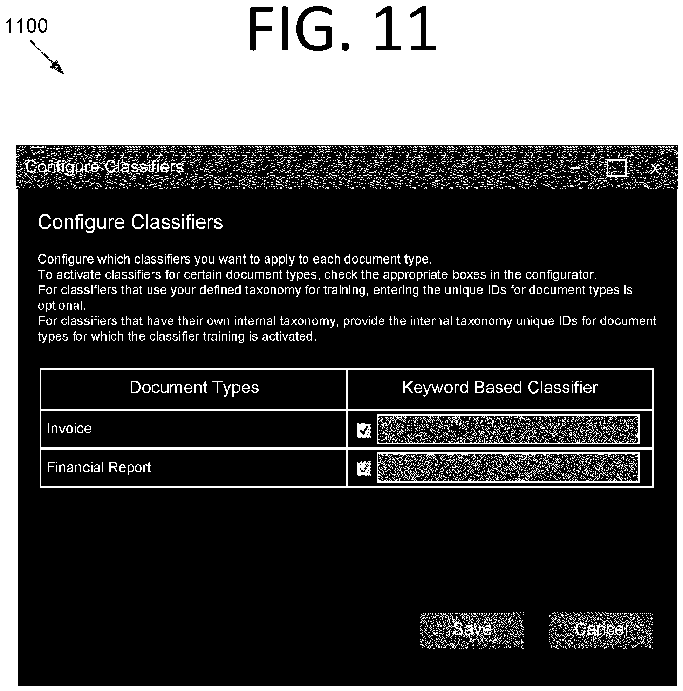

FIG. 10 is a screenshot illustrating a classifier and extractor training workflow 1000, according to an embodiment of the present invention. In this example, a train classifier scope activity 1010 includes a keyword-based classifier 1012 that can be configured by clicking a configure classifiers link 1014. The functionality of the classifier training configuration interface may be similar to classifier configuration interface 810 of FIG. 8B, except that no minimum confidence threshold needs to be set in some embodiments. Such a classifier training configuration interface 1100 is shown in FIG. 11. However, in certain embodiments, the classifier training configuration interface may include additional training setup parameters that may be document type and classifier-specific. Similarly, the functionality of the extractor training configuration interface may be similar to extractor configuration interface 910 of FIG. 9B, and in certain embodiments, additional training setup parameters may be included.

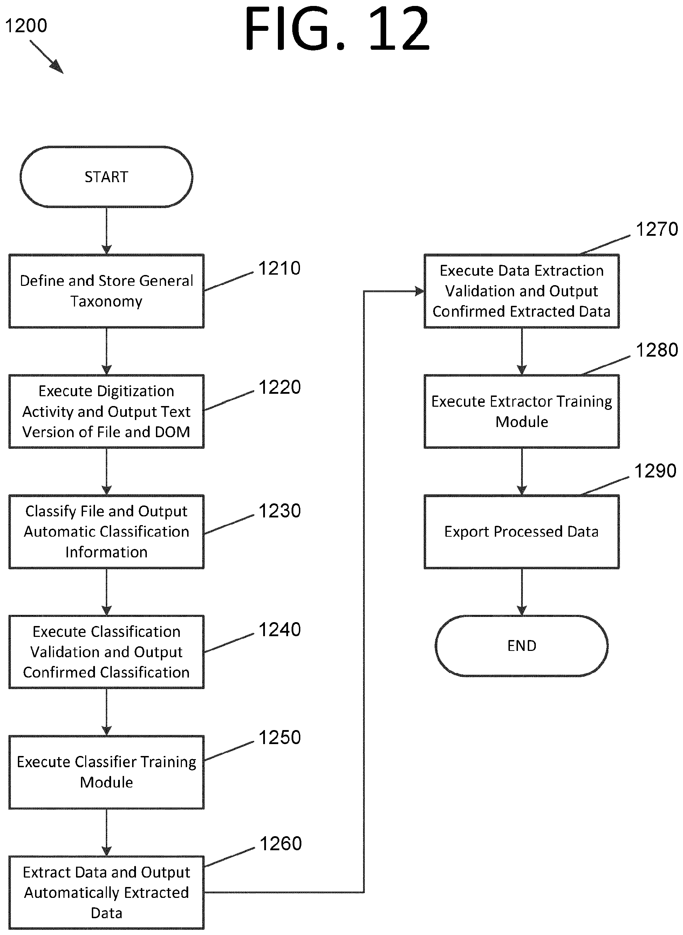

FIG. 12 is a flowchart illustrating a process 1200 for implementing a DPF for RPA, according to an embodiment of the present invention. The process beings with defining and storing a general taxonomy at 1210. In some embodiments, this may include executing a taxonomy manager providing an interface facilitating the definition of a list of document types targeted for classification and data extraction, along with associated fields for each of the document types, receiving the list of defined document types and the associated fields for each of the defined document types, and storing the list of document types and the associated fields in a master taxonomy data structure.

Next, a digitization activity is executed in an RPA workflow and a text version of a file and a Document Object Model (DOM) stored in a DOM data structure are output at 1220. In some embodiments, the DOM includes information pertaining to typed sections, typed word groups, and word level information in the file that are enhanced with rotation, skew, and relative width and height information. In certain embodiments, the digitization activity uses a plurality of OCR engines and the digitization activity includes implementing a voting system for the plurality of OCR engines and outputting a best combined result from the plurality of OCR engines.

The file is classified into one or more document types using one or more classifiers in the RPA workflow and automatic classification information is output at 1230. This information may be stored in a classification data structure in some embodiments. The one or more classifiers are configured to perform layout-based classification, sentiment-based classification, feature-based classification, natural language processing (NLP)-based classification, machine learning (ML)-based classification, deep learning-based classification, image-based classification, keyword-based classification, color-based classification, any combination thereof, or any other document classification method. In certain embodiments, the classification includes using acceptance criteria based on minimum confidence thresholds for each of the one or more classifiers. In some embodiments, the classification includes mapping the master taxonomy and an internal taxonomy of a respective classifier for the one or more classifiers. In certain embodiments, the classification includes prioritizing results from each classifier based on a classifier order in the RPA workflow, selecting classifiers of the one or more classifiers for use in the classification based on the document type, assigning a minimum confidence field to at least one of the one or more classifiers, or any combination thereof.

A classification validation module providing an interface for reviewing, correcting, and/or manually processing files for classification is executed and automatic classification information is output at 1240. A classifier training module that facilitates completion of a feedback loop for the one or more classifiers is executed at 1250. Then, data is extracted from the classified document using one or more extractors in the RPA workflow and the automatically extracted data is output at 1260. This extracted data are stored in an extraction data structure. In some embodiments, the extraction includes prioritizing results from each extractor based on an extractor order in the RPA workflow, selecting extractors of the one or more extractors for use in the extraction based on the document type, assigning a minimum confidence field to at least one of the one or more extractors, or any combination thereof.

A data extraction validation module providing an interface for correcting, and/or manually processing data points from the data extraction is executed and confirmed extracted data is output at 1270. An extractor training module that facilitates completion of a feedback loop for the one or more extractors is executed at 1280. The processed data, which includes classification results and extracted information, is then exported at 1290. It should be noted that once the taxonomy is defined, one or more of steps 1220-1290 may be optional in some embodiments based on the needs of the use case.

After process 1200 is completed, validated information is now available for usage in other systems. For instance, the information may be inserted into a database or an Excel^{®} file, a notification with specific values may be sent via email, etc. By way of nonlimiting example, process 1200 of FIG. 12 may begin with a PDF file and end with knowledge that the file is an Invoice, the Total Amount written in that Invoice is $42, the Vendor is "XYZ Bookstore," and the purchase date was July 23, 2019. These values are now available to be programmatically inserted into an accounting system for example.

The process steps performed in FIG. 12 may be performed by a computer program, encoding instructions for the processor(s) to perform at least part of the process described in FIG. 12, in accordance with embodiments of the present invention. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., processor(s) 510 of computing system 500 of FIG. 5) to implement all or part of the process steps described in FIG. 12, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

## Claims

1. A non-transitory computer-readable medium storing a computer program, the program configured to cause at least one processor (510) to:
automatically classify a file into one or more document types using one or more classifiers via one or more respective classification activities (802, 804) in a robotic process automation (RPA) workflow for an RPA robot (130), the one or more respective classification activities of the RPA workflow configured (806) to have a user selected data classification scope, the automatic classification comprising assigning a document type and a range of pages for the file to each classification result using one or more algorithms that perform layout-based classification, sentiment-based classification, feature-based classification, natural language processing (NLP)-based classification, machine learning (ML)-based classification, deep learning-based classification, image-based classification, keyword-based classification, colour-based classification, or any combination thereof;
store results of the automatic classification in a classification data structure;
automatically extract data from the classified file using one or more extractors via one or more respective extraction activities (902, 904) in the RPA workflow for the RPA robot (130), the one or more respective activities of the RPA workflow configured (906) to have a user selected data extraction scope, the automatic extraction comprising assigning identified values from within the classified file or the range of pages of the classified file to a requested field using one or more algorithms that comprise a template-based extractor, a layout-based extractor, a keyword-based extractor, a regular expression-based extractor, a context-based extractor, a label/anchor-based extractor, a pattern-based extractor, a natural language processing-based extractor, a machine learning extractor, a metadata-based extractor, or any combination thereof;
store the automatically extracted data in an extraction data structure; and
output (1290) the automatically extracted data,
wherein the RPA workflow comprises the one or more respective activities (802, 804, 902, 904) of the one or more classifiers and the one or more extractors.

2. The non-transitory computer-readable medium of claim 1, wherein
the automatic classification comprises using acceptance criteria based on minimum confidence thresholds for each of the one or more classifiers, mapping a master taxonomy and an internal taxonomy a respective classifier of the one or more classifiers, or both.

3. The non-transitory computer-readable medium of claims 1 or 2, wherein the program is further configured to cause the at least one processor (510) to:
prioritize results from each classifier based on a classifier order in the RPA workflow, select classifiers of the one or more classifiers for use in the automatic classification based on the document type, or both.

4. The non-transitory computer-readable medium of any of claims 1-3, wherein the program is further configured to cause the at least one processor (510) to:
execute a classification validation module providing an interface to review, correct, and/or manually process files for the automatic classification.

5. The non-transitory computer-readable medium of any of claims 1-4, wherein the automatic data extraction comprises using acceptance criteria based on minimum confidence thresholds for each of the one or more extractors, mapping the master taxonomy and an internal taxonomy of a respective extractor of the one or more extractors, or both.

6. The non-transitory computer-readable medium of any of claims 1-5, wherein the program is further configured to cause the at least one processor (510) to:
prioritize results from each extractor based on an extractor order in the RPA workflow, select extractors of the one or more extractors for use in the automatic extraction based on the document type, or both.

7. The non-transitory computer-readable medium of any of claims 1-6, wherein the program is further configured to cause the at least one processor (510) to:
execute a data extraction validation module providing an interface to correct and/or manually process data points from the automatic extraction.

8. The non-transitory computer-readable medium of any of claims 1-7, wherein the program is further configured to cause the at least one processor (510) to:
execute an extractor training module that facilitates completion of a feedback loop for the one or more extractors, execute a classifier training module that facilitates completion of a feedback loop for the one or more classifiers, or both.

9. The non-transitory computer-readable medium of any of claims 1-8, wherein the program is further configured to cause at least one processor (510) to:
execute a taxonomy manager providing an interface facilitating definition of a list of document types targeted for the automatic classification and automatic data extraction, along with associated fields for each of the document types;
receive a list of defined document types and the associated fields for each of the defined document types via the taxonomy manager; and
store the list of document types and the associated fields in a master taxonomy data structure.

10. The non-transitory computer-readable medium of any of claims 1-9, wherein the program is further configured to cause the at least one processor (510) to:
execute a digitization activity in a robotic process automation (RPA) workflow ; and
output a text version of a file and a Document Object Model (DOM) stored in a DOM data structure, wherein
the digitization activity uses a plurality of optical character recognition (OCR) engines and further comprises:
implementing a voting system for the plurality of OCR engines, and
outputting a best combined result from the plurality of OCR engines.

11. A computer-implemented method, comprising:
receiving, by a computing system (500), a list of defined document types and associated fields for each of the defined document types from a taxonomy manager;
storing the list of document types and the associated fields in a master taxonomy data structure, by the computing system (500);
automatically classifying the file into one or more document types, by the computing system (500), using one or more classifiers via one or more respective classification activities in a robotic process automation (RPA) workflow for an RPA robot (130), the one or more respective classification activities of the RPA workflow configured to have a user selected data classification scope, the automatic classification comprising assigning a document type and a range of pages for the file to each classification result using the list of defined document types and one or more classification algorithms that perform layout-based classification, sentiment-based classification, feature-based classification, natural language processing (NLP)-based classification, machine learning (ML)-based classification, deep learning-based classification, image-based classification, keyword-based classification, colour-based classification, or any combination thereof;
storing results of the automatic classification in a classification data structure, by the computing system (500);
automatically extracting data from the classified document using one or more extractors via one or more respective extraction activities in the RPA workflow for the RPA robot (130), the one or more respective activities of the RPA workflow configured to have a user selected data extraction scope, by the computing system (500), the automatic extraction comprising assigning identified values from within the classified document or a range of pages of the classified document to a requested field using one or more algorithms that comprise a template-based extractor, a layout-based extractor, a keyword-based extractor, a regular expression-based extractor, a context-based extractor, a label/anchor-based extractor, a pattern-based extractor, a natural language processing-based extractor, a machine learning extractor, a metadata-based extractor, or any combination thereof;
storing the automatically extracted data in an extraction data structure, by the computing system (500); and
outputting the results of the automatic extraction, by the computing system (500),
wherein the RPA workflow comprises the one or more respective activities of the one or more classifiers and the one or more extractors.

12. The computer-implemented method of claim 11, further comprising:
executing a digitization activity in the RPA workflow, by the computing system (500); and
outputting a text version of a file and a Document Object Model (DOM) stored in a DOM data structure, by the computing system (500), wherein
the DOM comprises information pertaining to typed sections, typed word groups, and word level information in the text version of the file that are enhanced with rotation, skew, relative width and height information, or any combination thereof.

13. The computer-implemented method of claim 11 or 12, further comprising:
executing a classifier training module, by the computing system (500), that facilitates completion of a feedback loop for the one or more classifiers;
executing, by the computing system, a classification validation module providing an interface to review, correct, and/or manually process files for the automatic classification;
executing an extractor training module, by the computing system (500), that facilitates completion of a feedback loop for the one or more extractors; and
executing, by the computing system (500), a data extraction validation module providing an interface to correct and/or manually process data points from the automatic extraction.

14. A system, comprising:
memory (515) storing computer program instructions; and
at least one processor (510) configured to execute the computer program instructions, the instructions configured to cause the at least one processor (510) to:
receive a list of defined document types and associated fields for each of the defined document types from a taxonomy manager;
execute a digitization activity in a robotic process automation (RPA) workflow for an RPA robot (130) and output a text version of a file and a Document Object Model (DOM);
automatically classify the file into one or more document types using one or more classifiers via one or more respective classification activities in the RPA workflow, the one or more respective classification activities of the RPA workflow configured to have a user selected data classification scope, the automatic classification comprising assigning a document type and a range of pages for the file to each classification result using the list of defined document types and one or more classification algorithms that perform layout-based classification, sentiment-based classification, feature-based classification, natural language processing (NLP)-based classification, machine learning (ML)-based classification, deep learning-based classification, image-based classification, keyword-based classification, colour-based classification, or any combination thereof;
automatically extract data from the classified document using one or more extractors via one or more respective extraction activities in the RPA workflow for the RPA robot (130), the one or more respective activities of the RPA workflow configured to have a user selected data extraction scope, the automatic extraction comprising assigning identified values from within the classified document or the range of pages of the classified document to a requested field using one or more algorithms that comprise a template-based extractor, a layout-based extractor, a keyword-based extractor, a regular expression-based extractor, a context-based extractor, a label/anchor-based extractor, a pattern-based extractor, a natural language processing-based extractor, a machine learning extractor, a metadata-based extractor, or any combination thereof; and
output the automatically extracted data,
wherein the RPA workflow comprises the one or more respective activities of the one or more classifiers and the one or more extractors.

## Patentansprüche

1. Nichtflüchtiges computerlesbares Medium, das ein Computerprogramm speichert, das dazu konfiguriert ist, mindestens einen Prozessor (510) zu veranlassen zum:
automatischen Klassifizieren einer Datei in einen oder mehrere Dokumenttypen unter Verwendung eines oder mehrerer Klassifizierer über eine oder mehrere jeweilige Klassifizierungsaktivitäten (802, 804) in einem robotergesteuerten Prozessautomatisierungs-Workflow (RPA-Workflow) für einen RPA-Roboter (130), wobei die eine oder die mehreren jeweiligen Klassifizierungsaktivitäten des RPA-Workflows dazu konfiguriert (806) sind, einen vom Benutzer ausgewählten Datenklassifizierungsumfang aufzuweisen, wobei die automatische Klassifizierung das Zuweisen eines Dokumenttyps und eines Bereichs von Seiten für die Datei zu jedem Klassifizierungsergebnis unter Verwendung eines oder mehrerer Algorithmen umfasst, die layoutbasierte Klassifizierung, sentimentbasierte Klassifizierung, merkmalsbasierte Klassifizierung, natürliche sprachverarbeitungsbasierte (NPL-basierte) Klassifizierung, auf maschinellem Lernen (ML-) basierte Klassifizierung, Deep-Learning-basierte Klassifizierung, bildbasierte Klassifizierung, schlüsselwortbasierte Klassifizierung, farbbasierte Klassifizierung oder eine Kombination davon durchführt;
Speichern von Ergebnissen der automatischen Klassifizierung in einer Klassifizierungsdatenstruktur;
automatischen Extrahieren von Daten aus der klassifizierten Datei unter Verwendung eines oder mehrerer Extraktoren über eine oder eine oder mehrere jeweilige Extraktionsaktivitäten (902, 904) in dem RPA-Workflow für den RPA-Roboter (130), wobei die eine oder die mehreren jeweiligen Extraktionsaktivitäten in dem RPA-Workflow (906) dazu konfiguriert sind, einen vom Benutzer ausgewählten Datenextraktionsumfang aufzuweisen, wobei die automatische Extraktion das Zuweisen identifizierter Werte von innerhalb der klassifizierten Datei oder dem Bereich von Seiten der klassifizierten Datei an ein angefordertes Feld unter Verwendung eines oder mehrerer Algorithmen umfasst, die einen vorlagenbasierten Extraktor, die einen vorlagenbasierten Extraktor, einen layoutbasierten Extraktor, einen schlüsselwortbasierten Extraktor, einen Extraktor basierend auf regulären Ausdrücken, einen kontextbasierten Extraktor, einen label-/ankerbasierten Extraktor, einen musterbasierten Extraktor, einen natürlichen sprachverarbeitungsbasierten Extraktor, einen Extraktor maschinellen Lernens, einen metadatenbasierten Extraktor oder eine Kombination davon umfassen;
Speichern der automatisch extrahierten Daten in einer Extraktionsdatenstruktur; und
Ausgeben (1290) automatisch extrahierter Daten,
wobei der RPA-Workflow die eine oder mehreren jeweiligen Aktivitäten (802, 804, 902, 904) des einen oder der mehreren Klassifizierer und des einen oder der mehreren Extraktoren umfasst.

2. Nichtflüchtiges computerlesbares Medium nach Anspruch 1, wobei
die automatische Klassifizierung die Verwendung von Akzeptanzkriterien basierend auf Mindestkonfidenzschwellenwerten für jeden des einen oder der mehreren Klassifizierer, das Abbilden einer Master-Taxonomie und einer internen Taxonomie eines jeweiligen Klassifizierers des einen oder der mehreren Klassifizierer oder beider umfasst.

3. Nichtflüchtiges computerlesbares Medium nach Anspruch 1 oder 2, wobei das Programm ferner dazu konfiguriert ist, den mindestens einen Prozessor (510) zu veranlassen zum:
Priorisieren von Ergebnissen von jedem Klassifizierer basierend auf einer Klassifiziererreihenfolge in dem RPA-Workflow, Auswählen von Klassifizierern des einen oder der mehreren Klassifizierer zur Verwendung in der automatischen Klassifizierung basierend auf dem Dokumententyp oder auf beiden.

4. Nichtflüchtiges computerlesbares Medium nach einem der Ansprüche 1 bis 3, wobei das Programm ferner dazu konfiguriert ist, den mindestens einen Prozessor (510) zu veranlassen zum:
Ausführen eines Klassifizierungsbestätigungsmoduls, das eine Schnittstelle zum Überprüfen, Korrigieren und/oder manuellen Verarbeiten von Dateien für die automatische Klassifizierung bereitstellt.

5. Nichtflüchtiges computerlesbares Medium nach einem der Ansprüche 1 bis 4, wobei die automatische Datenextraktion die Verwendung von Akzeptanzkriterien basierend auf Mindestkonfidenzschwellenwerten für jeden des einen oder der mehreren Klassifizierer, das Abbilden einer Master-Taxonomie und einer internen Taxonomie eines jeweiligen Extraktors des einen oder der mehreren Extraktoren oder beider umfasst.

6. Nichtflüchtiges computerlesbares Medium nach einem der Ansprüche 1 bis 5, wobei das Programm ferner dazu konfiguriert ist, den mindestens einen Prozessor (510) zu veranlassen zum:
Priorisieren von Ergebnissen von jedem Extraktor basierend auf einer Extraktorreihenfolge in dem RPA-Workflow, Auswählen von Extraktoren aus dem einen oder den mehreren Extraktoren zur Verwendung in der automatischen Extraktion basierend auf dem Dokumententyp oder auf beiden.

7. Nichtflüchtiges computerlesbares Medium nach einem der Ansprüche 1 bis 6, wobei das Programm ferner dazu konfiguriert ist, den mindestens einen Prozessor (510) zu veranlassen zum:
Ausführen eines Extraktionsbestätigungsmoduls, das eine Schnittstelle zum Korrigieren und/oder manuellen Verarbeiten von Datenpunkten für die automatische Klassifizierung bereitstellt.

8. Nichtflüchtiges computerlesbares Medium nach einem der Ansprüche 1 bis 7, wobei das Programm ferner dazu konfiguriert ist, den mindestens einen Prozessor (510) zu veranlassen zum:
Ausführen eines Extraktortrainingsmoduls, das das Abschließen einer Rückkopplungsschleife für den einen oder die mehreren Extraktoren erleichtert, Ausführen eines Klassifizierertrainingsmoduls, das das Abschließen einer Rückkopplungsschleife für den einen oder die mehreren Klassifizierer erleichtert, oder beider.

9. Nichtflüchtiges computerlesbares Medium nach einem der Ansprüche 1 bis 8, wobei das Programm ferner dazu konfiguriert ist, den mindestens einen Prozessor (510) zu veranlassen zum:
Ausführen eines Taxonomieverwalters, der eine Schnittstelle bereitstellt, die die Definition einer Liste von Dokumententypen erleichtert, auf die für die automatische Klassifizierung und automatische Datenextraktion abgezielt wird, gemeinsam mit zugeordneten Feldern für jeden der Dokumenttypen;
Empfangen einer Liste definierter Dokumenttypen und der zugeordneten Felder für jeden der definierten Dokumenttypen über den Taxonomieverwalter; und
Speichern der Liste von Dokumenttypen und der zugeordneten Felder in einer Master-Taxonomiedatenstruktur.

10. Nichtflüchtiges computerlesbares Medium nach einem der Ansprüche 1 bis 9, wobei das Programm ferner dazu konfiguriert ist, den mindestens einen Prozessor (510) zu veranlassen zum:
Ausführen einer Digitalisierungsaktivität in einem robotergesteuerten Prozessautomatisierungs-Workflow (RPA-Workflow); und
Ausgeben einer Textversion einer Datei und eines Dokumentobjektmodells (DOM), das in einer DOM-Datenstruktur gespeichert ist, wobei
die Digitalisierungsaktivität eine Vielzahl optischer Zeichenerkennungs-Engines (OCR-Engines) verwendet und ferner Folgendes umfasst:
Implementieren eines Abstimmsystems für die Vielzahl von OCR-Engines und
Ausgeben eines besten kombinierten Ergebnisses aus der Vielzahl von OCR-Engines.

11. Computerimplementiertes Verfahren, das Folgendes umfasst:
Empfangen durch ein Rechensystem (500) einer Liste definierter Dokumenttypen und zugeordneter Felder für jeden der definierten Dokumenttypen von einem Taxonomieverwalter;
Speichern der Liste von Dokumenttypen und der zugeordneten Felder in einer Master-Taxonomiedatenstruktur durch das Rechensystem (500);
automatisches Klassifizieren einer Datei in einen oder mehrere Dokumenttypen durch die Rechenvorrichtung (500) unter Verwendung eines oder mehrerer Klassifizierer über eine oder mehrere jeweilige Klassifizierungsaktivitäten in einem robotergesteuerten Prozessautomatisierungs-Workflow (RPA-Workflow) für einen RPA-Roboter (130), wobei die eine oder die mehreren jeweiligen Klassifizierungsaktivitäten des RPA-Workflows dazu konfiguriert sind, einen vom Benutzer ausgewählten Datenklassifizierungsumfang aufzuweisen, wobei die automatische Klassifizierung das Zuweisen eines Dokumenttyps und eines Bereichs von Seiten für die Datei zu jedem Klassifizierungsergebnis unter Verwendung definierter Dokumenttypen und eines oder mehrerer Klassifizierungsalgorithmen umfasst, die layoutbasierte Klassifizierung, sentimentbasierte Klassifizierung, merkmalsbasierte Klassifizierung, natürliche sprachverarbeitungsbasierte (NPL-basierte) Klassifizierung, auf maschinellem Lernen (ML-) basierte Klassifizierung, Deep-Learning-basierte Klassifizierung, bildbasierte Klassifizierung, schlüsselwortbasierte Klassifizierung, farbbasierte Klassifizierung oder eine Kombination davon durchführen;
Speichern von Ergebnissen der automatischen Klassifizierung in einer Klassifizierungsdatenstruktur durch das Rechensystem (500);
automatisches Extrahieren von Daten aus dem klassifizierten Dokument unter Verwendung eines oder mehrerer Extraktoren über eine oder oder mehrere Extraktionsaktivitäten in dem RPA-Workflow für den RPA-Roboter (130), wobei die eine oder die mehreren jeweiligen Extraktionsaktivitäten in dem RPA-Workflow dazu konfiguriert sind, einen vom Benutzer ausgewählten Datenextraktionsumfang aufzuweisen, durch das Rechensystem (500), wobei die automatische Extraktion das Zuweisen identifizierter Werte von innerhalb des klassifizierten Dokuments oder einem Bereich von Seiten der klassifizierten Datei an ein angefordertes Feld unter Verwendung eines oder mehrerer Algorithmen umfasst, die einen vorlagenbasierten Extraktor, einen label-/ankerbasierten Extraktor, einen schlüsselwortbasierten Extraktor, einen Extraktor basierend auf regulären Ausdrücken, einen layoutbasierten Extraktor, einen kontextbasierten Extraktor, einen musterbasierten Extraktor, einen natürlichen sprachverarbeitungsbasierten Extraktor, einen Extraktor maschinellen Lernens, einen metadatenbasierten Extraktor oder eine Kombination davon umfassen;
Speichern der automatisch extrahierten Daten in einer Extraktionsdatenstruktur durch das Rechensystem (500); und
Ausgeben der Ergebnisse der automatischen Extraktion durch das Rechensystem (500),
wobei der RPA-Workflow die eine oder mehreren jeweiligen Aktivitäten des einen oder der mehreren Klassifizierer und des einen oder der mehreren Extraktoren umfasst.

12. Computerimplementiertes Verfahren nach Anspruch 11, das weiter Folgendes umfasst:
Ausführen einer Digitalisierungsaktivität in dem RPA-Workflow durch das Rechensystem (500); und
Ausgeben einer Textversion einer Datei und eines Dokumentobjektmodells (DOM), das in einer DOM-Datenstruktur gespeichert ist, durch das Rechensystem (500), wobei
das DOM Informationen bezüglich typisierter Abschnitte, typisierter Wortgruppen und Wortniveauinformationen in der Textversion der Datei umfasst, die mit Informationen zur Drehung, Neigung, relativen Breite und Höhe oder einer Kombination davon verbessert sind.

13. Computerimplementiertes Verfahren nach Anspruch 11 oder 12, das ferner Folgendes umfasst:
Ausführen eines Klassifizierertrainingsmoduls durch das Rechensystem (500), das das Abschließen einer Rückkopplungsschleife für den einen oder die mehreren Klassifizierer erleichtert;
Ausführen durch das Rechensystem eines Klassifizierungsbestätigungsmoduls, das eine Schnittstelle zum Überprüfen, Korrigieren und/oder manuellen Verarbeiten von Dateien für die automatische Klassifizierung bereitstellt;
Ausführen eines Extraktortrainingsmoduls durch das Rechensystem (500), das das Abschließen einer Rückkopplungsschleife für den einen oder die mehreren Extraktoren erleichtert; und
Ausführen eines Datenextraktionsbestätigungsmoduls durch das Rechensystem (500), das eine Schnittstelle zum Korrigieren und/oder manuellen Verarbeiten von Datenpunkten für die automatische Klassifizierung bereitstellt.

14. System, das Folgendes umfasst:
einen Speicher (515), der Computerprogrammanweisungen speichert; und
mindestens einem Prozessor (510), der dazu konfiguriert ist, die Computerprogrammanweisungen auszuführen, wobei die Anweisungen dazu konfiguriert sind, den mindestens einen Prozessor (510) zu veranlassen zum:
Empfangen einer Liste definierter Dokumenttypen und zugeordneter Felder für jeden der definierten Dokumenttypen von dem Taxonomieverwalter; und
Ausführen einer Digitalisierungsaktivität in einem robotergesteuerten Prozessautomatisierungs-Workflow (RPA-Workflow) für einen RPA-Roboter (130), und Ausgeben einer Textversion einer Datei und eines Dokumentobjektmodells (DOM);
automatischen Klassifizieren einer Datei in einen oder mehrere Dokumenttypen unter Verwendung eines oder mehrerer Klassifizierer über eine oder mehrere jeweilige Klassifizierungsaktivitäten in dem RPA-Workflow, wobei die eine oder die mehreren jeweiligen Klassifizierungsaktivitäten des RPA-Workflows dazu konfiguriert sind, einen vom Benutzer ausgewählten Datenklassifizierungsumfang aufzuweisen, wobei die automatische Klassifizierung das Zuweisen eines Dokumenttyps und eines Bereichs von Seiten für die Datei zu jedem Klassifizierungsergebnis unter Verwendung der Liste definierter Dokumenttypen und eines oder mehrerer Klassifizierungsalgorithmen umfasst, die layoutbasierte Klassifizierung, sentimentbasierte Klassifizierung, merkmalsbasierte Klassifizierung, natürliche sprachverarbeitungsbasierte (NPL-basierte) Klassifizierung, auf maschinellem Lernen (ML-) basierte Klassifizierung, Deep-Learning-basierte Klassifizierung, bildbasierte Klassifizierung, schlüsselwortbasierte Klassifizierung, farbbasierte Klassifizierung oder eine Kombination davon durchführen;
automatischen Extrahieren von Daten aus dem klassifizierten Dokument unter Verwendung eines oder mehrerer Extraktoren über eine oder oder mehrere Extraktionsaktivitäten in dem RPA-Workflow für den RPA-Roboter (130), wobei die eine oder die mehreren jeweiligen Aktivitäten das RPA-Workflows dazu konfiguriert sind, einen vom Benutzer ausgewählten Datenextraktionsumfang aufzuweisen, wobei die automatische Extraktion das Zuweisen identifizierter Werte von innerhalb des klassifizierten Dokuments oder dem Bereich von Seiten des klassifizierten Dokuments an ein angefordertes Feld unter Verwendung eines oder mehrerer Algorithmen umfasst, die einen vorlagenbasierten Extraktor, einen layoutbasierten Extraktor, einen schlüsselwortbasierten Extraktor, einen Extraktor basierend auf regulären Ausdrücken, einen kontextbasierten Extraktor, einen label-/ankerbasierten Extraktor, einen musterbasierten Extraktor, einen natürlichen sprachverarbeitungsbasierten Extraktor, einen Extraktor maschinellen Lernens, einen metadatenbasierten Extraktor oder eine Kombination davon umfassen;
Ausgeben der automatisch extrahierten Daten,
wobei der RPA-Workflow die eine oder mehreren jeweiligen Aktivitäten des einen oder der mehreren Klassifizierer und des einen oder der mehreren Extraktoren umfasst.

## Revendications

1. Support non transitoire lisible par ordinateur stockant un programme informatique, le programme étant configuré pour faire en sorte qu'au moins un processeur (510) :
classe automatiquement un fichier en un ou plusieurs types de documents à l'aide d'un ou de plusieurs classificateurs via une ou plusieurs activités de classification respectives (802, 804) dans un flux de travail d'automatisation de processus robotisé (RPA) pour un robot RPA (130), la ou les activités de classification respectives du flux de travail RPA étant configurées (806) pour avoir une portée de classification de données sélectionnée par l'utilisateur, la classification automatique comprenant l'attribution d'un type de document et d'une plage de pages pour le fichier à chaque résultat de classification à l'aide d'un ou de plusieurs algorithmes qui effectuent une classification basée sur la mise en page, une classification basée sur le sentiment, une classification basée sur les caractéristiques, une classification basée sur le traitement du langage naturel (NLP), une classification basée sur l'apprentissage automatique (ML), une classification basée sur l'apprentissage profond, une classification basée sur l'image, une classification basée sur les mots-clés, une classification basée sur la couleur, ou toute combinaison de celles-ci ;
stocke les résultats de la classification automatique dans une structure de données de classification :
extraire automatiquement des données du fichier classé à l'aide d'un ou de plusieurs extracteurs via une ou plusieurs activités d'extraction respectives (902, 904) dans le flux de travail RPA pour le robot RPA (130), la ou les activités respectives du flux de travail RPA configurées (906) pour avoir une portée d'extraction de données sélectionnée par l'utilisateur, l'extraction automatique comprenant l'attribution de valeurs identifiées à partir du fichier classé ou de la plage de pages du fichier classé à un champ demandé à l'aide d'un ou de plusieurs algorithmes qui comprennent un extracteur basé sur un modèle, un extracteur basé sur une mise en page, un extracteur basé sur des mots-clés, un extracteur basé sur des expressions régulières, un extracteur basé sur le contexte, un extracteur basé sur une étiquette/une ancre, un extracteur basé sur des modèles, un extracteur basé sur le traitement du langage naturel, un extracteur basé sur l'apprentissage automatique, un extracteur basé sur des métadonnées, ou toute combinaison de ceux-ci ;
stocker les données extraites automatiquement dans une structure de données d'extraction ; et
sortir (1290) les données extraites automatiquement,
dans lequel le flux de travail RPA comprend une ou plusieurs activités respectives (802, 804, 902, 904) de l'un ou plusieurs classificateurs et d'un ou plusieurs extracteurs.

2. Le support non transitoire lisible par ordinateur de la revendication 1, dans lequel
la classification automatique comprend l'utilisation de critères d'acceptation basés sur des seuils de confiance minimaux pour chacun du ou des classificateurs, la mise en correspondance d'une taxonomie principale et d'une taxonomie interne d'un classificateur respectif du ou des classificateurs, ou les deux.

3. Le support non transitoire lisible par ordinateur selon les revendications 1 ou 2, dans lequel le programme est en outre configuré pour amener l'au moins un processeur (510) à :
hiérarchiser les résultats de chaque classificateur en fonction d'un ordre de classificateur dans le flux de travail RPA, sélectionner des classificateurs parmi un ou plusieurs classificateurs à utiliser dans la classification automatique en fonction du type de document, ou les deux.

4. Le support non transitoire lisible par ordinateur de l'une quelconque des revendications 1 à 3, dans lequel le programme est en outre configuré pour amener le au moins un processeur (510) à :
exécuter un module de validation de classification fournissant une interface pour examiner, corriger et/ou traiter manuellement des fichiers pour la classification automatique.

5. Le support non transitoire lisible par ordinateur de l'une quelconque des revendications 1 à 4, dans lequel l'extraction automatique de données comprend l'utilisation de critères d'acceptation basés sur des seuils de confiance minimaux pour chacun des un ou plusieurs extracteurs, la mise en correspondance de la taxonomie principale et d'une taxonomie interne d'un extracteur respectif des un ou plusieurs extracteurs, ou les deux.

6. Le support non transitoire lisible par ordinateur de l'une quelconque des revendications 1 à 5, dans lequel le programme est en outre configuré pour amener le au moins un processeur (510) à :
prioriser les résultats de chaque extracteur en fonction d'un ordre d'extracteur dans le flux de travail RPA, sélectionner des extracteurs parmi un ou plusieurs extracteurs à utiliser dans l'extraction automatique en fonction du type de document, ou les deux.

7. Le support non transitoire lisible par ordinateur de l'une quelconque des revendications 1 à 6, dans lequel le programme est en outre configuré pour amener le au moins un processeur (510) à :
exécuter un module de validation d'extraction de données fournissant une interface pour corriger et/ou traiter manuellement les points de données de l'extraction automatique.

8. Le support non transitoire lisible par ordinateur de l'une quelconque des revendications 1 à 7, dans lequel le programme est en outre configuré pour amener l'au moins un processeur (510) à :
exécuter un module d'entraînement d'extracteur qui facilite l'achèvement d'une boucle de rétroaction pour l'un ou les plusieurs extracteurs, exécuter un module d'entraînement de classificateur qui facilite l'achèvement d'une boucle de rétroaction pour l'un ou les plusieurs classificateurs, ou les deux.

9. Le support non transitoire lisible par ordinateur de l'une quelconque des revendications 1 à 8, dans lequel le programme est en outre configuré pour amener au moins un processeur (510) à :
exécuter un gestionnaire de taxonomie fournissant une interface facilitant la définition d'une liste de types de documents ciblés pour la classification automatique et l'extraction automatique de données, ainsi que les champs associés pour chacun des types de documents ;
recevoir une liste de types de documents définis et les champs associés pour chacun des types de documents définis via le gestionnaire de taxonomie, et
stocker la liste des types de documents et les champs associés dans une structure de données de taxonomie principale.

10. Le support non transitoire lisible par ordinateur de l'une quelconque des revendications 1 à 9, dans lequel le programme est en outre configuré pour amener au moins un processeur (510) à :
exécuter une activité de numérisation dans un flux de travail d'automatisation de processus robotique (RPA) ; et
produire une version texte d'un fichier et d'un modèle d'objet de document (DOM) stocké dans une structure de données DOM, dans lequel :
l'activité de numérisation utilise une pluralité de moteurs de reconnaissance optique de caractères (OCR) et comprend en outre :
la mise en œuvre d'un système de vote pour la pluralité de moteurs OCR, et
la production d'un meilleur résultat combiné à partir de la pluralité de moteurs OCR.

11. Un procédé mis en œuvre par ordinateur, comprenant les étapes consistant à :
recevoir, par un système informatique (500), une liste de types de documents définis et de champs associés pour chacun des types de documents définis à partir d'un gestionnaire de taxonomie ;
stocker la liste des types de documents et des champs associés dans une structure de données de taxonomie principale, par le système informatique (500) ;
classer automatiquement le fichier en un ou plusieurs types de documents, par le système informatique (500), en utilisant un ou plusieurs classificateurs via une ou plusieurs activités de classification respectives dans un flux de travail d'automatisation de processus robotique (RPA) pour un robot RPA (130), la ou les activités de classification respectives du flux de travail RPA configurées pour avoir une portée de classification de données sélectionnée par l'utilisateur, la classification automatique comprenant l'attribution d'un type de document et d'une plage de pages pour le fichier à chaque résultat de classification en utilisant la liste des types de documents définis et un ou plusieurs algorithmes de classification qui effectuent une classification basée sur la mise en page, une classification basée sur les sentiments, une classification basée sur les caractéristiques, une classification basée sur le traitement du langage naturel (NLP), une classification basée sur l'apprentissage automatique (ML), une classification basée sur l'apprentissage profond, une classification basée sur l'image, une classification basée sur les mots-clés, une classification basée sur la couleur, ou toute combinaison de celles-ci ;
stocker les résultats de la classification automatique dans une structure de données de classification, par le système informatique (500) ;
extraire automatiquement des données du document classé à l'aide d'un ou de plusieurs extracteurs via une ou plusieurs activités d'extraction respectives dans le flux de travail RPA pour le robot RPA (130), la ou les activités respectives du flux de travail RPA étant configurées pour avoir une portée d'extraction de données sélectionnée par l'utilisateur, par le système informatique (500), l'extraction automatique comprenant l'attribution de valeurs identifiées à partir du document classé ou d'une plage de pages du document classé à un champ demandé à l'aide d'un ou plusieurs algorithmes qui comprennent un extracteur basé sur un modèle, un extracteur basé sur une mise en page, un extracteur basé sur des mots-clés, un extracteur basé sur des expressions régulières, un extracteur basé sur le contexte, un extracteur basé sur des étiquettes/ancres, un extracteur basé sur des modèles, un extracteur basé sur le traitement du langage naturel, un extracteur basé sur l'apprentissage automatique, un extracteur basé sur des métadonnées, ou toute combinaison de ceux-ci, stockant les données extraites automatiquement dans une structure de données d'extraction, par le système informatique (500) ; et
sortir des résultats de l'extraction automatique, par le système informatique (500),
dans lequel le flux de travail RPA comprend une ou plusieurs activités respectives d'un ou plusieurs classificateurs et d'un ou plusieurs extracteurs.

12. Le procédé informatique selon la revendication 11, comprenant en outre :
l'exécution d'une activité de numérisation dans le flux de travail RPA, par le système informatique (500) ; et
la sortie d'une version texte d'un fichier et d'un modèle d'objet de document (DOM) stocké dans une structure de données DOM, par le système informatique (500),
dans lequel le DOM comprend des informations relatives aux sections typées, aux groupes de mots typés et aux informations au niveau des mots dans la version texte du fichier qui sont améliorées avec des informations de rotation, d'inclinaison, de largeur et de hauteur relatives, ou toute combinaison de celles-ci.

13. Le procédé informatique selon la revendication 11 ou 12, comprenant en outre :
l'exécution d'un module de formation de classificateur, par le système informatique (500), qui facilite l'achèvement d'une boucle de rétroaction pour le ou les classificateurs ;
l'exécution, par le système informatique, d'un module de validation de classification fournissant une interface pour examiner, corriger et/ou traiter manuellement des fichiers pour la classification automatique ;
l'exécution d'un module de formation d'extracteur, par le système informatique (500), qui facilite l'achèvement d'une boucle de rétroaction pour le ou les extracteurs ; et
l'exécution, par le système informatique (500), d'un module de validation d'extraction de données fournissant une interface pour corriger et/ou traiter manuellement des points de données à partir de l'extraction automatique.

14. Système, comprenant :
une mémoire (515) stockant des instructions de programme informatique ; et
au moins un processeur (510) configuré pour exécuter les instructions de programme informatique, les instructions étant configurées pour amener le ou les processeurs (510) à :
recevoir une liste de types de documents définis et de champs associés pour chacun des types de documents définis à partir d'un gestionnaire de taxonomie ;
exécuter une activité de numérisation dans un flux de travail d'automatisation de processus robotisé (RPA) pour un robot RPA (130) et produire une version texte d'un fichier et d'un modèle d'objet de document (DOM) ;
classer automatiquement le fichier en un ou plusieurs types de documents à l'aide d'un ou plusieurs classificateurs via une ou plusieurs activités de classification respectives dans le flux de travail RPA, la ou les activités de classification respectives du flux de travail RPA étant configurées pour avoir une portée de classification de données sélectionnée par l'utilisateur, la classification automatique comprenant l'attribution d'un type de document et d'une plage de pages pour le fichier à chaque résultat de classification à l'aide de la liste des types de documents définis et d'un ou plusieurs algorithmes de classification qui effectuent une classification basée sur la mise en page, une classification basée sur les sentiments, une classification basée sur les caractéristiques, une classification basée sur le traitement du langage naturel (NLP), une classification basée sur l'apprentissage automatique (ML), une classification basée sur l'apprentissage profond, une classification basée sur l'image, une classification basée sur les mots-clés, une classification basée sur la couleur, ou toute combinaison de celles-ci :
extraire automatiquement des données du document classé à l'aide d'un ou plusieurs extracteurs via une ou plusieurs activités d'extraction respectives dans le flux de travail RPA pour le robot RPA (130), la ou les activités respectives du flux de travail RPA étant configurées pour avoir une portée d'extraction de données sélectionnée par l'utilisateur, l'extraction automatique comprenant l'attribution de valeurs identifiées à partir du document classé ou de la plage de pages du document classé à un champ demandé à l'aide d'un ou plusieurs algorithmes qui comprennent un extracteur basé sur un modèle, un extracteur basé sur la mise en page, un extracteur basé sur les mots-clés, un extracteur basé sur les expressions régulières, un extracteur basé sur le contexte, un extracteur basé sur les étiquettes/ancres, un extracteur basé sur les modèles, un extracteur basé sur le traitement du langage naturel, un extracteur basé sur l'apprentissage automatique, un extracteur basé sur les métadonnées, ou toute combinaison de ceux-ci ; et
produire les données extraites automatiquement,
dans lequel le flux de travail RPA comprend la ou les activités respectives du ou des classificateurs et du ou des extracteurs.
